# EUROPÄISCHE PATENTSCHRIFT

(11) **EP 3 094 184 B1**
(45) Veröffentlichungstag und Bekanntmachung des Hinweises auf die Patenterteilung: **11.07.2018**
(21) Anmeldenummer: 15700222.1
(22) Anmeldetag: 12.01.2015
(51) Int. Cl.: A21B 3/18, A21B 5/02

(54) **BACKVORRICHTUNG UND ABNAHMEVORRICHTUNG**
BAKING DEVICE AND REMOVAL DEVICE
DISPOSITIF DE CUISSON ET DISPOSITIF DE RETRAIT

(30) Priorität: 17.01.2014 WO PCT/EP2014/050884; 12.08.2014 AT 6282014
(43) Veröffentlichungstag der Anmeldung: 23.11.2016
(73) Patentinhaber: Haas Food Equipment GmbH, 1210 Wien (AT)
(72) Erfinder: HAAS, Johannes, A-1040 Wien (AT); HAAS, Josef, A-2100 Leobendorf (AT); JIRASCHEK, Stefan, A-2202 Königsbrunn (AT); ADAM, Reinhart, A-1030 Wien (AT)
(74) Vertreter: Puchberger & Partner Patentanwälte
(86) Internationale Anmeldenummer: PCT/EP2015/050411
(87) Internationale Veröffentlichungsnummer: WO 2015/107022

(56) Entgegenhaltungen:
- EP-A1- 1 021 955
- WO-A1-2004/043151
- WO-A1-2012/152778
- CN-U- 203 369 311
- FR-A1- 2 492 633
- NL-C- 81 915

## Beschreibung

Die Erfindung betrifft eine Backvorrichtung und/oder eine Abnahmevorrichtung zur kontinuierlichen Abnahme von cremegefüllten Backprodukten aus entlang einer Förderfläche bewegten Backformen und zum kontinuierlichen Transport der Backprodukte zu einer Ausgabefläche, umfassend ein um eine Drehachse drehbar gelagertes, antreibbares und gegebenenfalls angetriebenes Drehgestell, wobei am Drehgestell und mit dem Drehgestell mitdrehbar ein erstes Abnahmeelement vorgesehen ist, wobei das erste Abnahmeelement bewegbar und insbesondere um eine erste Schwenkachse schwenkbar gegenüber dem Drehgestell gelagert ist, sodass das erste Abnahmeelement von einer zurückgezogenen Stellung in eine nach außen ausgefahrene Stellung bringbar ist.

Gemäß Stand der Technik sind Industriebacköfen zur kontinuierlichen Herstellung unterschiedlicher Backprodukte in entlang eines Endlosförderers bewegten Backzangen bekannt. Insbesondere sind Backöfen zur Herstellung von Waffelprodukten mit weicher Konsistenz, wie beispielsweise zur Herstellung von sogenannten Weichwaffeln bekannt. Diese Backprodukte werden in auf- und zuklappbaren Backformen gebacken und von einer Produktabnahmevorrichtung aus den Backformen abgenommen. Herkömmliche Produktabnahmevorrichtungen für derartige Produkte umfassen eine Trommel, aus der in Drehrichtung gebogene Nadeln ausfahrbar sind. Diese gebogenen Nadeln werden in die in den Backformen befindlichen gebackenen Produkte eingestochen. Durch Weiterdrehen der Trommel werden die von den Nadeln durchstochenen Produkte aus der Backform entfernt und weiter zu einer Ausgabefläche befördert. Um ein Aufspießen bzw. ein Freigeben der Backprodukte zu bewirken, sind gemäß Stand der Technik die Nadeln an der Trommel ein- und ausfahrbar angeordnet. Um Backprodukte aus den Backformen abnehmen zu können, ohne dabei ein ungewünschtes Ausbrechen von Teilen der Backprodukte zu riskieren, werden gemäß Stand der Technik die Nadeln durch einen Großteil des Backproduktes hindurchgestochen.

Nachteilig an dieser Konstruktion ist, dass sie für gefüllte Backprodukte, wie beispielsweise für cremegefüllte Backprodukte, nicht eingesetzt werden kann, da die Nadeln den Cremeraum perforieren würden, wodurch die Creme in weiterer Folge austreten kann und wodurch darüber hinaus die nadelförmigen Abnahmekörper durch die Creme verschmutzen. Ferner besteht bei herkömmlichen Nadelabnahmevorrichtungen der grundsätzliche Nachteil, dass die Nadeln sehr tief in das Produkt eingestochen werden müssen.

Herkömmliche Vorrichtungen sind beispielsweise aus der EP 1 021 955 A1, der WO 2004/043151 A1, der WO 2012/152778 A1 und der CN 203 369 311 U bekannt.

Aus der angeführten EP 1 021 955 A1 ist eine Vorrichtung zum Entfernen von Brot aus Backformen bekannt. Aus der angeführten WO 2004/043151 A1 ist eine Vorrichtung zur Entfernung von Backprodukten aus Containern bekannt. Aus der angeführten WO 2012/152778 A1 ist ein Backofen mit einer Produktabnahmevorrichtung bekannt.

Aufgabe der Erfindung ist es nun, die Nachteile des Standes der Technik zu überwinden. Dies umfasst insbesondere, dass die Backprodukte schonend und effizient aus den Backformen entnommen werden können. Ferner umfasst dies insbesondere, dass die notwendige Einstechtiefe der Nadeln verringert ist, sodass beispielsweise eine zentral angeordnete Füllung bzw. deren Füllraum bei der Abnahme nicht perforiert wird.

Die erfindungsgemäße Aufgabe wird insbesondere durch die Merkmale der unabhängigen Patentansprüche gelöst.

Insbesondere betrifft die Erfindung eine Backvorrichtung und eine Abnahmevorrichtung für Backprodukte, wie insbesondere weiche Waffeln, weiche gefüllte Waffeln oder weiche und in Backzangen gebackene Kuchen, die ebenfalls gefüllt sein können.

Die Füllungen dieser Backprodukte umfassen beispielsweise Cremen wie Fettcremen, Schokoladecremen, Vanillecremen, Fruchtcremen, Konfitüren und/oder ähnliche Cremen. Diese Füllung ist bevorzugt zentral in einem Füllungsraum oder einer Füllungskammer angeordnet und von einem gebackenen Teig oder einer gebackenen Backmasse umgeben. Die Erfindung betrifft eine Abnahmevorrichtung zur kontinuierlichen Abnahme von gefüllten Backprodukten aus entlang einer Förderfläche bewegten Backformen und zum kontinuierlichen Transport der Backprodukte zu einer Ausgabefläche umfassend ein um eine Drehachse drehbar gelagertes, antreibbares und gegebenenfalls angetriebenes Drehgestell, wobei am Drehgestell und mit dem Drehgestell mitdrehbar ein erstes Abnahmeelement vorgesehen ist, wobei das erste Abnahmeelement bewegbar, insbesondere um eine erste Schwenkachse schwenkbar, gegenüber dem Drehgestell gelagert ist, sodass das erste Abnahmeelement von einer zurückgezogenen Stellung in eine nach außen ausgefahrene Stellung bringbar ist, wobei am Drehgestell und mit dem Drehgestell mitdrehbar ein zweites Abnahmeelement vorgesehen ist, wobei das zweite Abnahmeelement bewegbar, insbesondere um eine zweite Schwenkachse schwenkbar, gegenüber dem Drehgestell gelagert ist, sodass das zweite Abnahmeelement von einer zurückgezogenen Stellung in eine nach außen ausgefahrene Stellung bringbar ist, und/oder wobei das erste Abnahmeelement und das zweite Abnahmeelement paarweise einen Abnahmegreifer bilden.

Es ist vorgesehen, dass eine Steuerungsvorrichtung zur Bewegung der Abnahmeelemente von der zurückgezogenen Stellung in die nach außen ausgefahrene Stellung und von der nach außen ausgefahrenen Stellung in die zurückgezogene Stellung und zum Öffnen und Schließen des Abnahmegreifers vorgesehen ist.

Es ist vorgesehen, dass die Steuerungsvorrichtung eine erste Drehkulisse mit einer ersten Steuerkurve und ein entlang der ersten Steuerkurve geführtes erstes Abtastelement umfasst, und dass das erste Abtastelement einen Normalabstand, und insbesondere einen Nachlauf, zur ersten Schwenkachse aufweist und mit dem ersten Abnahmeelement verbunden ist, sodass durch Bewegung des ersten Abtastelements das erste Abnahmeelement von der zurückgezogenen Stellung in die nach außen ausgefahrene Stellung und von der nach außen ausgefahrenen Stellung in die zurückgezogene Stellung bewegbar ist.

Gegebenenfalls ist vorgesehen, dass die Steuerungsvorrichtung eine zweite Drehkulisse mit einer zweiten Steuerkurve und ein entlang der zweiten Steuerkurve geführtes zweites Abtastelement umfasst, und dass das zweite Abtastelement einen Normalabstand und insbesondere einen Nachlauf zur zweiten Schwenkachse aufweist und mit dem zweiten Abnahmeelement verbunden ist, sodass durch Bewegung des zweiten Abtastelements das zweite Abnahmeelement von der zurückgezogenen Stellung in die nach außen ausgefahrene Stellung und von der nach außen ausgefahrenen Stellung in die zurückgezogene Stellung bewegbar ist.

Gegebenenfalls ist vorgesehen, dass eines der beiden Abnahmeelemente an seinem freien Ende mit einer Spitze versehen ist, oder dass beide Abnahmeelemente an ihren freien Enden mit jeweils einer Spitze versehen sind, wobei die Spitze dazu eingerichtet ist, in das abzunehmende Backprodukt einzustechen.

Gegebenenfalls ist vorgesehen, dass der Abstand zwischen der Spitze des ersten Abnahmeelements und der Spitze des zweiten Abnahmeelements in der ausgefahrenen Stellung geringer ist als in der zurückgezogenen Stellung.

Gegebenenfalls ist vorgesehen, dass der Abstand zwischen der Spitze des ersten Abnahmeelements und der Spitze des zweiten Abnahmeelements in der ausgefahrenen Stellung größer als null ist, sodass sich die Spitzen beim Ausfahren weder kreuzen noch berühren und insbesondere entfernt von der Cremefüllung des Backproduktes in das Backprodukt eingestochen sind.

Gegebenenfalls ist vorgesehen, dass der Abnahmegreifer ein erstes Abnahmeelement und ein zweites Abnahmeelement umfasst, und dass eines der beiden Abnahmeelemente in Drehrichtung des Drehgestells bewegbar und insbesondere ausfahrbar ist, und dass das andere Abnahmeelement gegen die Drehrichtung des Drehgestells bewegbar und insbesondere ausfahrbar ist.

Gegebenenfalls ist vorgesehen, dass der Abnahmegreifer ein erstes Abnahmeelement und ein zweites Abnahmeelement umfasst, und dass eines der beiden Abnahmeelemente und insbesondere dessen Spitze in seiner ausgefahrenen Stellung in Drehrichtung des Drehgestells weist, und dass das andere Abnahmeelement und insbesondere dessen Spitze in seiner ausgefahrenen Stellung gegen die Drehrichtung des Drehgestells weist, sodass die beiden Abnahmeelemente und insbesondere deren Spitzen in der ausgefahrenen Stellung zueinander weisen.

Gegebenenfalls ist vorgesehen, dass das Abnahmeelement im Wesentlichen entlang seiner Haupterstreckungsrichtung bewegbar und insbesondere ausfahrbar ist, oder dass die Abnahmeelemente im Wesentlichen entlang ihrer Haupterstreckungsrichtungen bewegbar oder schwenkbar und insbesondere ausfahrbar sind.

Gegebenenfalls ist vorgesehen, dass die Spitze des Abnahmeelements in der ausgefahrenen Stellung im Wesentlichen in tangentiale Richtung des Drehgestells weist, oder dass die Spitzen der Abnahmeelemente in ihrer ausgefahrenen Stellung im Wesentlichen in tangentiale Richtung des Drehgestells weisen.

Gegebenenfalls ist vorgesehen, dass das erste Abnahmeelement gegenüber dem Drehgestell um eine erste Schwenkachse schwenkbar angeordnet ist, wobei die erste Schwenkachse beabstandet von der Drehachse des Drehgestells am Drehgestell angeordnet ist und/oder dass das zweite Abnahmeelement gegenüber dem Drehgestell um eine zweite Schwenkachse schwenkbar angeordnet ist, wobei die zweite Schwenkachse beabstandet von der Drehachse des Drehgestells am Drehgestell angeordnet ist
Gegebenenfalls ist vorgesehen, dass die erste Schwenkachse und/oder die zweite Schwenkachse parallel beabstandet zur Drehachse des Drehgestells angeordnet ist oder sind, sodass die Abnahmeelemente des Abnahmegreifers entlang einer Normalebene der Drehachse des Drehgestells in entgegengesetzte Richtungen greiferartig zueinander bewegbar angeordnet sind, und dass die Abnahmeelemente des Abnahmegreifers gegebenenfalls entlang einer Normalebene der Drehachse des Drehgestells verlaufen.
Gegebenenfalls ist vorgesehen, dass die erste Schwenkachse und die zweite Schwenkachse parallel voneinander entfernt am Drehgestell angeordnet sind. Gegebenenfalls ist vorgesehen, dass die erste Steuerkurve einen ersten Steuerkurvenabschnitt und einen zweiten Steuerkurvenabschnitt aufweist, wobei der mittlere Radius oder der Radius des ersten Steuerkurvenabschnitts kleiner ist als der mittlere Radius oder der Radius des zweiten Steuerkurvenabschnitts, dass am Übergang vom ersten Steuerkurvenabschnitt auf den zweiten Steuerkurvenabschnitt ein die beiden Steuerkurvenabschnitte verbindender erster Übergangsabschnitt vorgesehen ist und dass am Übergang vom zweiten Steuerkurvenabschnitt auf den ersten Steuerkurvenabschnitt ein die beiden Steuerkurvenabschnitte verbindender zweiter Übergangsabschnitt vorgesehen ist.
Gegebenenfalls ist vorgesehen, dass die zweite Steuerkurve einen ersten Steuerkurvenabschnitt und einen zweiten Steuerkurvenabschnitt aufweist, wobei der mittlere Radius oder der Radius des ersten Steuerkurvenabschnitts kleiner ist als der mittlere Radius oder der Radius des zweiten Steuerkurvenabschnitts, dass am Übergang vom ersten Steuerkurvenabschnitt auf den zweiten Steuerkurvenabschnitt ein die beiden Steuerkurvenabschnitte verbindender erster Übergangsabschnitt vorgesehen ist und dass am Übergang vom zweiten Steuerkurvenabschnitt auf den ersten Steuerkurvenabschnitt ein die beiden Steuerkurvenabschnitte verbindender zweiter Übergangsabschnitt vorgesehen ist.
Gegebenenfalls ist vorgesehen, dass die erste Drehkulisse und die zweite Drehkulisse parallel zueinander angeordnet sind.
Gegebenenfalls ist vorgesehen, dass zur Abnahme der Backprodukte ein Übergangsabschnitt der ersten Steuerkurve und ein Übergangsabschnitt der zweiten Steuerkurve in Umfangsrichtung des Drehgestells versetzt zueinander angeordnet sind, wobei der Abstand des Versatzes im Wesentlichen dem Abstand des ersten Abtastelements zum zweiten Abtastelement entspricht, sodass die beiden Abnahmeelemente eines Abnahmegreifers gleichzeitig zueinander bewegt oder geschwenkt werden, um den Abnahmegreifer zu schließen.

Gegebenenfalls ist vorgesehen, dass zur Ausgabe der Backprodukte an die Ausgabefläche ein Übergangsabschnitt der ersten Steuerkurve und ein Übergangsabschnitt der zweiten Steuerkurve in Umfangsrichtung des Drehgestells derart zueinander angeordnet sind, dass das in Drehrichtung des Drehgestells vordere Abnahmeelement vor dem in Drehrichtung des Drehgestells hinteren Abnahmeelement von der nach außen ausgefahrenen Stellung in die zurückgezogene Stellung bewegt wird oder ist.

Gegebenenfalls ist vorgesehen, dass mehrere erste Abnahmeelemente über einen ersten Abnahmebalken miteinander verbunden sind und dass mehrere zweite Abnahmeelemente über einen zweiten Abnahmebalken miteinander verbunden sind.

Gegebenenfalls ist vorgesehen, dass mehrere erste Abnahmeelemente über einen ersten Abnahmebalken miteinander verbunden sind, dass mehrere zweite Abnahmeelemente über einen zweiten Abnahmebalken miteinander verbunden sind und dass die beiden Abnahmebalken parallel beabstandet zueinander und parallel beabstandet zur Drehachse des Drehgestells angeordnet sind.

Gegebenenfalls ist vorgesehen, dass mehrere erste Abnahmeelemente über einen ersten Abnahmebalken miteinander verbunden sind, dass mehrere zweite Abnahmeelemente über einen zweiten Abnahmebalken miteinander verbunden sind, dass der erste Abnahmebalken um die erste Schwenkachse schwenkbar mit dem Drehgestell verbunden ist und über das erste Abtastelement der Steuervorrichtung gegenüber dem Drehgestell schwenkbar ist, und dass der zweite Abnahmebalken um die zweite Schwenkachse schwenkbar mit dem Drehgestell verbunden ist und über das zweite Abtastelement der Steuervorrichtung gegenüber dem Drehgestell schwenkbar ist.

Gegebenenfalls ist vorgesehen, dass die über den ersten Abnahmebalken verbundenen und angesteuerten ersten Abnahmeelemente und die über den zweiten Abnahmebalken verbundenen und angesteuerten zweiten Abnahmeelemente zusammen einen Balkengreifer zur Abnahme mehrerer Backprodukte bilden.

Gegebenenfalls ist vorgesehen, dass die über den ersten Abnahmebalken verbundenen und angesteuerten ersten Abnahmeelemente und die über den zweiten Abnahmebalken verbundenen und angesteuerten zweiten Abnahmeelemente zusammen einen Balkengreifer zur Abnahme mehrerer Backprodukte bilden und dass entlang der Umfangsrichtung des Drehgestells mehrere Balkengreifer vorgesehen sind.

Gegebenenfalls ist vorgesehen, dass im Außenbereich des Drehgestells zumindest ein Plattenkörper vorgesehen ist, der mit dem Drehgestell starr verbunden ist, wobei der Plattenkörper Öffnungen zur Durchführung der Abnahmeelemente aufweist.

Gegebenenfalls ist vorgesehen, dass im Außenbereich des Drehgestells zumindest ein Plattenkörper vorgesehen ist, der mit dem Drehgestell starr verbunden ist, wobei der Plattenkörper Öffnungen zur Durchführung der Abnahmeelemente aufweist, und dass mehrere Plattenkörper vorgesehen sind, die zusammen ein Gehäuse bilden oder dass ein einziger gekrümmter Plattenkörper ein Gehäuse bildet.

Gegebenenfalls ist vorgesehen, dass das Gehäuse zylindrisch oder trommelförmig ausgestaltet ist, wobei die Symmetrieachse oder die Rotationsachse des Gehäuses mit der Drehachse des Drehgestells zusammenfällt.

Gegebenenfalls ist vorgesehen, dass die beiden Drehkulissen beidseitig des Drehgestells ortsfest insbesondere starr an einem ortsfest angeordneten Maschinengestell angeordnet sind.

Gegebenenfalls betrifft die Erfindung eine Backvorrichtung zur Herstellung von Backprodukten, insbesondere zur Herstellung cremegefüllter Backprodukte, wobei die Backvorrichtung auf- und zuklappbare Backzangen umfassende Backformen aufweist, die auf einem in Längsrichtung eines Maschinengestells des Backofens umlaufenden und kontinuierlich bewegten Endlosförderer entlang einer Förderfläche von einer Beschickungsvorrichtung durch einen Backraum und zu einer Abnahmevorrichtung bewegbar sind, wobei eine Ausgabefläche zum Abtransport der Backprodukte aus der Backvorrichtung vorgesehen ist und wobei eine Abnahmevorrichtung zur kontinuierlichen Abnahme der cremegefüllten Backprodukte aus den Backformen und zum kontinuierlichen Transport der Backprodukte zur Ausgabefläche gemäß der vorliegenden Beschreibung vorgesehen ist.
Gegebenenfalls ist vorgesehen, dass die Drehung des Drehgestells mit der Bewegung der Backformen synchronisiert ist, sodass die Geschwindigkeit der Abnahmeelemente im Bereich der Backformen im Wesentlichen gleich ist wie die Geschwindigkeit der Backformen.
Gegebenenfalls ist vorgesehen, dass die Drehkulisse(n) der Abnahmevorrichtung starr mit dem Maschinengestell verbunden sind.
Gegebenenfalls ist vorgesehen, dass die Abnahmegreifer im Bereich unmittelbar vor der Ausgabefläche geschlossen sind und dass die Abnahmegreifer im Bereich unmittelbar nach der Ausgabefläche geöffnet sind, sodass ein oder mehrere Backprodukte von den Abnahmegreifern auf die Ausgabefläche ausgegeben werden. Gegebenenfalls ist vorgesehen, dass die Abnahmegreifer im Bereich unmittelbar vor der Backform geöffnet sind und dass die Abnahmegreifer im Bereich unmittelbar nach der Backform geschlossen sind, sodass ein oder mehrere Backprodukte von einem oder mehreren Abnahmegreifern aus der Backform entnommen werden. Die Erfindung betrifft ein Verfahren zur Herstellung und/oder zur kontinuierlichen Abnahme gefüllter Backprodukte aus entlang einer Förderfläche bewegten Backformen und zum kontinuierlichen Transport der Backprodukte zu einer Ausgabefläche umfassend folgende Schritte:
- Drehen des Drehgestells um seine Drehachse;
- Zurückziehen zweier Abnahmeelemente in eine zurückgezogene Stellung;
- Drehung der Abnahmeelemente in Richtung jener Backform, aus der das Backprodukt entnommen werden soll;
- Betätigen der Steuervorrichtung, wenn die Abnahmeelemente im Bereich dieser Backform angekommen sind, womit die Abnahmeelemente von der zurückgezogenen Stellung in eine nach außen ausgefahrene Stellung bewegt werden;
- Einstechen der Spitze zumindest eines Abnahmeelements in das Backprodukt durch Bewegung des Abnahmeelements, wobei bevorzugt zwei Abnahmeelemente beidseitig des Backproduktes in dieses eingestochen werden;
- Stoppen der Einstechbewegung der Abnahmeelemente, bevor diese in den Füllraum eindringen, sodass der Füllraum nicht perforiert wird,
- Weiterdrehen des Drehgestells, sodass das Backprodukt auf der Kreisbahn der Abnahmeelemente abgehoben und insbesondere aus der Backform entfernt wird,
- Weiterbefördern des abgenommenen Backprodukts entlang dieser Kreisbahn, bis es sich im Bereich der Ausgabefläche befindet;
- Zurückziehen der Abnahmeelemente in eine zurückgezogene Stellung, wodurch die Spitze des Abnahmeelements oder die Spitzen der Abnahmeelemente aus dem Backprodukt gezogen werden, sodass das Backprodukt von dem Drehgestell gelöst wird und es über die Ausgabefläche abgeführt werden kann.
Gegebenenfalls ist vorgesehen, dass
- in einem ersten Schritt ein Teig oder eine Backmasse auf beide Backplatten einer aufgeklappten Backzange aufgetragen wird,
- in einem nachfolgende Schritt eine Füllung, wie beispielsweise eine Creme, eine Fettcreme oder eine Konfitüre auf zumindest eine Backplatte der Backzange und insbesondere auf einen auf der Backplatte aufgetragenen Teig oder auf eine auf der Backplatte aufgetragene Backmasse zentral aufgetragen wird,
- in einem nachfolgende Schritt die Backzange geschlossen wird, wodurch die die Füllung zwischen den zwei Teigformen oder Backmassenformen eingeschlossen wird,
- in einem nachfolgenden Schritt die zwei Teigformen oder Backmassenformen durch Backen in einem Backraum verbunden werden,
- und die so gebildeten gefüllten Backprodukte mit einem darin angeordneten Füllraum abgenommen werden.

Gegebenenfalls betrifft die Erfindung eine Backvorrichtung und/oder eine Abnahmevorrichtung, wobei die Abnahmevorrichtung einen Abnahmegreifer umfasst, wobei der Abnahmegreifer paarweise gegeneinanderwirkende Abnahmeelemente umfasst, wobei die Abnahmeelemente dazu eingerichtet sind in das abzunehmende Backprodukt von zwei Seiten einzustechen. Gegebenenfalls ist in allen Ausführungsformen vorgesehen, dass die Spitzen der Abnahmeelemente eines Abnahmegreifers in der geschlossenen Stellung einen Abstand zueinander aufweisen. Bevorzugt ist dieser Abstand größer als das Abmaß des zwischen den Abnahmeelementen angeordneten Füllraums des Backproduktes. Dadurch wird verhindert, dass eines der beiden Abnahmeelemente in den Füllraum einsticht.

Bevorzugt sind die Abnahmevorrichtung und die Backvorrichtung zur industriellen Herstellung von Backprodukten eingerichtet, wobei die Herstellung sowie die Abnahme kontinuierlicher erfolgen und wobei die Abnahmevorrichtung und/oder die Backvorrichtung "in-line" in einer industriellen Anlage zur Herstellung von Backprodukten eingesetzt werden kann.

Die Abnahmevorrichtung umfasst bevorzugt ein erstes Abnahmeelement und ein zweites Abnahmeelement. Die beiden Abnahmeelemente sind bewegbar an einem drehbaren Drehgestell angeordnet. Zur Bewegung der Abnahmeelemente ist gegebenenfalls eine Steuervorrichtung vorgesehen. Die beiden Abnahmeelemente wirken zusammen als Abnahmegreifer, der geschlossen und geöffnet werden kann. Die Bewegung der Abnahmeelemente bzw. das Öffnen und das Schließen des Abnahmegreifers geschieht bevorzugt über eine Steuerungsvorrichtung. Über diese Steuerungsvorrichtung kann, beispielsweise in Abhängigkeit von der Lage des Abnahmegreifers, ein Öffnen oder Schließen bewirkt werden. Beispielsweise wird der Abnahmegreifer im Bereich der Ausgabefläche geöffnet, um das Backprodukt auf die Ausgabefläche abzulegen. Beispielsweise wird der Abnahmegreifer im Bereich der Backformen geschlossen, um das Backprodukt zu greifen und aus der Backform zu entnehmen. Insbesondere ist die Steuerungsvorrichtung als Drehkulisse ausgebildet. Über diese Drehkulisse kann ein Öffnen und Schließen des Abnahmegreifers über gewisse Bereiche der Drehung des Drehgestells bewirkt werden. In jenem Bereich, in dem das Backprodukt über den Abnahmegreifer am Drehgestell befestigt ist, ist der Abnahmegreifer bevorzugt geschlossen. In jenem Bereich, in dem kein Backprodukt mit dem Drehgestell verbunden ist, ist der Abnahmegreifer bevorzugt geöffnet. Durch dieses Öffnen und Schließen des Abnahmegreifers kann ein Backprodukt von den bewegten Backformen abgenommen und kontinuierlich an eine Ausgabefläche übergeben werden. Gegebenenfalls sind die Backformen zur Herstellung der Backprodukte und bei der Entnahme kontinuierlich bewegt. Gegebenenfalls ist das Drehgestell zur Abnahme der Backprodukte aus den Backformen kontinuierlich bewegt, insbesondere kontinuierlich gedreht.

Die Drehachse des Drehgestells ist insbesondere derart angeordnet, dass eine Entnahme der Backprodukte durch den oder die Abnahmegreifer ermöglicht ist. Bevorzugt ist vorgesehen, dass die Abnahmegreifer oder dass der Abnahmegreifer im Bereich der Backform, aus der das Backprodukt entnommen werden soll, die selbe Geschwindigkeit und zumindest abschnittsweise oder punktuell dieselbe Bewegungsrichtung aufweist wie das Backprodukt. Insbesondere kann die Bewegungsrichtung der Backprodukte eine Tangente der Bewegungskurve der Abnahmegreifer sein.

Gegebenenfalls ist vorgesehen, dass beidseitig des Drehgestells jeweils eine Drehkulisse vorgesehen ist. In dieser Ausführungsform sind zwei Drehkulissen vorgesehen, wobei eine Drehkulisse zur Steuerung der ersten Abnahmeelemente und eine zweite Drehkulisse zur Steuerung der zweiten Abnahmeelemente eingerichtet ist.

Gegebenenfalls ist der Abnahmegreifer in allen Ausführungsformen zwischen der Stellung im Bereich der Backform und der Ausgabefläche geschlossen, sodass Backprodukte entnommen, befördert und abgegeben werden können.

In weiterer Folge wird die Erfindung anhand konkreter Ausführungsbeispiele und anhand der Figuren weiter beschrieben.
Fig. 1 zeigt eine schematische Seitenansicht einer möglichen Ausführungsform einer Backmaschine.
Fig. 2 zeigt eine schematische Schrägansicht eines Details einer erfindungsgemäßen Backmaschine umfassend eine erfindungsgemäße Abnahmevorrichtung.
Fig. 3 zeigt eine schematische Schrägansicht einer Abnahmevorrichtung gemäß Fig. 2, jedoch von der anderen Seite.
Fig. 4 zeigt eine schematische Seitenansicht, die teilweise geschnitten dargestellt ist.
Fig. 5 zeigt eine schematische Darstellung einer möglichen Ausführungsform der Steuerkurven der Drehkulissen.
Fig. 6 zeigt eine Schnittdarstellung einer erfindungsgemäßen Abnahmevorrichtung. Die Figuren 7a, 7b und 7c zeigen unterschiedliche Ausführungsformen möglicher Abnahmeelemente bzw. möglicher Abnahmebalken.

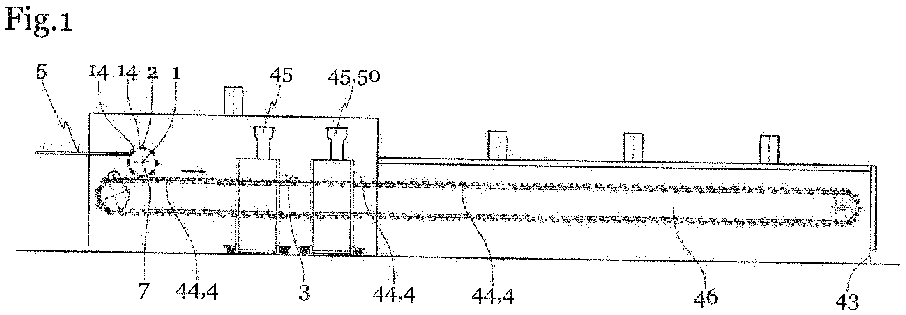

Fig. 1 zeigt eine schematische Seitenansicht einer Backvorrichtung, wobei die Backvorrichtung zur Herstellung von Backprodukten eingerichtet ist und auf- und zuklappbare Backzangen 44 umfasst, die in Längsrichtung eines Maschinengestells 43 entlang einem Endlosförderer durch die Backvorrichtung bewegt werden. Der Endlosförderer und die Bewegung der Backzangen geschieht insbesondere entlang einer Förderfläche 3. Bevorzugt sind zwei Förderflächen 3 vorgesehen: eine untere Förderfläche und eine obere Förderfläche, wobei die Backzangen von der oberen Förderfläche zu einem hinteren Umlenkpunkt, dann entlang der unteren Förderfläche zurück zu einem vorderen Umlenkpunkt und dann wieder zur oberen Förderfläche bewegt werden. Die Backzangen 44 bilden in bevorzugter Weise Backformen 4. In diesen Backformen werden die Backprodukte 2 gebacken. Entlang der Förderfläche sind nacheinander eine Beschickungsvorrichtung 45, eine Vorrichtung zum Zuklappen der Backzangen 44, ein Backraum 46, eine Vorrichtung zum Aufklappen der Backzangen 44 sowie eine Produktabnahmevorrichtung vorgesehen. Bevorzugt ist die Produktabnahmevorrichtung als erfindungsgemäße Abnahmevorrichtung 1 ausgebildet. Gegebenenfalls umfasst die Beschickungsvorrichtung 45 eine Füllvorrichtung 50. In dieser Füllvorrichtung 50 wird eine Füllung für das Backprodukt, beispielsweise eine Creme, eine Vanillecreme, eine Schokoladecreme, ähnliche Fettcremen oder eine Konfitüre in die Backform 4 eingebracht. Die Füllung ist bevorzugt zentral in dem Backprodukt 2 vorgesehen und bildet einen vom Teiganteil des Backproduktes getrennten zentralen Cremeraum oder Füllraum. In bevorzugter Weise ist die erfindungsgemäße Vorrichtung derart ausgestaltet, dass Backprodukte 2 ohne Perforation dieses Füllraums aus der Backform 4 entnehmbar sind.

Die Abnahmevorrichtung 1 weist bevorzugt ein Drehgestell 7 auf. Dieses Drehgestell ist drehbar angeordnet. Die Drehachse des Drehgestells 7 verläuft in der vorliegenden Ausführungsform bevorzugt horizontal. In allen Ausführungsformen kann die Drehachse im Wesentlichen horizontal und normal zur Förderrichtung der Backform(en) 4 verlaufen. Durch Drehung des Drehgestells 7 werden Abnahmegreifer 14 mit dem Drehgestell mitgedreht. Durch Steuerung dieser Abnahmegreifer 14 können jeweils ein oder mehrere Backprodukte 2 aus der Backform 4 entnommen werden. Ferner werden die Backprodukte 2 von der Backform 4 zu einer Ausgabefläche 5 gefördert. Auf dieser Ausgabefläche 5 können die Backprodukte weiter transportiert und insbesondere abtransportiert werden.

Gegebenenfalls können in allen Ausführungsformen pro Backzange 44 mehrere Backformen 4 vorgesehen sein. Diese Backformen 4 können beispielsweise normal zur Förderrichtung der Backzangen nebeneinander angeordnet sein. Durch das Vorsehen mehrerer Abnahmegreifer 14 auf einem Drehgestell 7 können gleichzeitig mehrere Backprodukte aus den mehrere Backformen 4 enthaltenden Backzangen 44 entnommen werden.

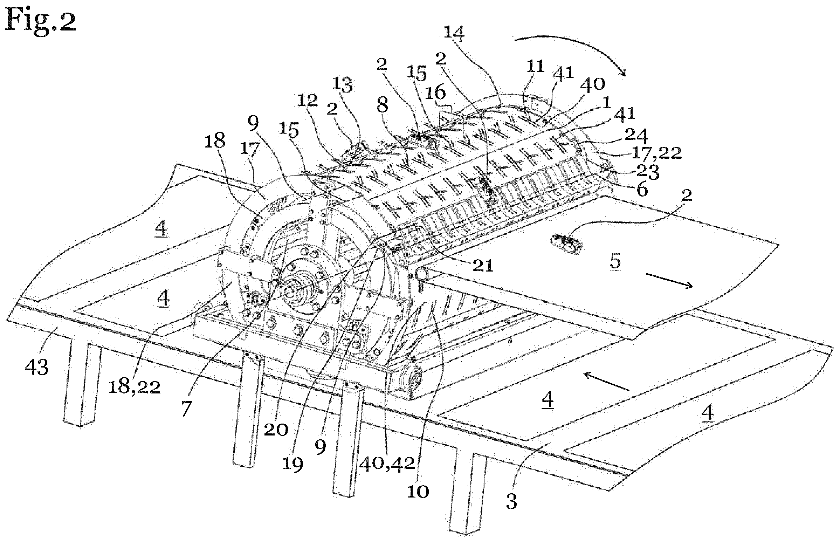

Fig. 2 zeigt eine schematische Schrägansicht einer erfindungsgemäßen Abnahmevorrichtung und einer erfindungsgemäßen Backvorrichtung. Durch Pfeile sind die Förderrichtung der Backzangen und die Drehrichtung des Drehgestells 7 schematisch eingezeichnet. Die erfindungsgemäße Backvorrichtung umfasst eine Förderfläche 3 für Backformen 4, wobei die Backformen und die Backmaschine nur schematisch dargestellt sind. Über die Abnahmevorrichtung 1 können Backprodukte 2 aus den Backformen 4 an eine Ausgabefläche 5 übergeben werden. Diese Ausgabefläche 5 kann in allen Ausführungsformen beispielsweise als Endlosförderer ausgebildet sein. Das Drehgestell 7 ist um eine Drehachse 6 drehbar angeordnet, wobei diese Drehachse 6 beispielsweise oder bevorzugt horizontal und normal zur Förderrichtung der Backformen angeordnet ist. Insbesondere ist die Drehachse 6 in allen Ausführungsformen bevorzugt derart angeordnet, dass die an dem Drehgestell 7 vorgesehenen Abnahmegreifer 14 zur Abnahme der Backprodukte 2 im Bereich der Backformen 4 die selbe Geschwindigkeit und Bewegungsrichtung aufweisen wie die Backformen 4. In der vorliegenden Ausführungsform entspricht die Förderrichtung der Backformen 4 im Wesentlichen der Tangente der Bewegung der Abnahmegreifer 14. Dadurch kann ein Backprodukt 2 insbesondere am unteren Totpunkt des Drehgestells 7 gegriffen werden und entlang der Drehrichtung des Drehgestells 7 aus der Backform 4 entnommen werden.

Die Abnahmegreifer 14 umfassen bevorzugt mehrere Abnahmeelemente. Insbesondere umfasst ein beispielhafter Abnahmegreifer 14 ein erstes Abnahmeelement 8 und ein zweites Abnahmeelement 12. Die beiden Abnahmeelemente sind bewegbar, bevorzugt schwenkbar, am Drehgestell 7 vorgesehen. Insbesondere ist das erste Abnahmeelement 8 um eine erste Schwenkachse 9 schwenkbar und das zweite Abnahmeelement 12 um eine zweite Schwenkachse 13 schwenkbar. Durch die Bewegbarkeit können die Abnahmeelemente 8, 12 von einer zurückgezogenen Stellung 10 in eine ausgefahrene Stellung 11 gebracht werden. Die Schwenkachsen sind bevorzugt starr gegenüber dem Drehgestell angeordnet und werden dadurch mit diesem mitgedreht. Zumindest eines der Abnahmeelemente 8, 12 weist eine Spitze 15 auf. Bevorzugt weisen beide Abnahmeelemente 8, 12, jeweils zumindest eine Spitze 15 auf. Diese Spitze bzw. diese Spitzen 15 sind dazu eingerichtet, in die Backprodukte 2 einzugreifen, insbesondere einzudringen, um ein sicheres Halten und Abnehmen der Backprodukte 2 aus der Backform 4 zu ermöglichen. Insbesondere ist in der ausgefahrenen Stellung 11 der Abstand 16 zwischen den Spitzen 15 geringer als in der zurückgezogenen Stellung. Beim Ausfahren der Abnahmeelemente 8, 12 werden somit bevorzugt die Spitzen 15 der Abnahmeelemente 8, 12 zueinander bewegt. Dadurch wird gegebenenfalls der Abnahmegreifer 14 beidseitig in das Backprodukt 2 eingestochen. Die Bewegung der Abnahmeelemente 8, 12 bzw. des Abnahmegreifers 14 geschieht bevorzugt über eine Steuerungsvorrichtung 17. Die Steuerungsvorrichtung 17 kann in allen Ausführungsformen beispielsweise bewegbare Elemente umfassen, die über eine geeignete zeitliche und örtliche Steuerung ein Öffnen und Schließen des Abnahmegreifers 14 oder der Abnahmegreifer 14 bewirken.

In der vorliegenden Ausführungsform umfasst die Steuerungsvorrichtung 17 zumindest eine erste Drehkulisse 18. Gegebenenfalls umfasst die Steuerungsvorrichtung 17 der Abnahmevorrichtung 1, wie in der vorliegenden Ausführungsform, auch eine zweite Drehkulisse 22. Die Steuerungsvorrichtung 17 umfasst insbesondere im Bereich ihrer ersten Drehkulisse 18 eine erste Steuerkurve 19. Diese Steuerkurve 19 wird durch ein erstes Abtastelement 20 abgetastet. Das erste Abtastelement 20 weist gegebenenfalls einen Normalabstand 21 zur ersten Schwenkachse 9 auf. Durch unterschiedliche Abstände der Steuerkurven 19 zur Drehachse 16 wird bei Drehung des Drehgestells 7 das Abtastelement 20 in radialer Richtung bewegt. Diese Bewegung wird dazu verwendet, die ersten Abnahmeelemente 8 zu bewegen und insbesondere von einer zurückgezogenen Stellung 10 in eine ausgefahrene Stellung 11 oder umgekehrt zu bewegen. Gleiches gilt bevorzugt auch für die zweite Steuerkurve 23 mit ihrem die zweite Steuerkurve 23 abtastenden zweiten Abtastelement 24. Bevorzugt umfasst die Abnahmevorrichtung 1 in allen Ausführungsformen einen oder mehrere Plattenkörper 40. Diese Plattenkörper 40 bilden bevorzugt ein Gehäuse 42. Die Plattenkörper 40 bzw. das Gehäuse 42 weisen gegebenenfalls Öffnungen 41 auf. Durch diese Öffnungen 41 können die Abnahmeelemente 8, 12 hindurchgeführt werden und insbesondere von ihrer zurückgezogenen Stellung 10 in ihre ausgefahrene Stellung 11 ausgefahren werden. In der ausgefahrenen Stellung überragen bevorzugt in allen Ausführungsformen die Abnahmeelemente 8, 12 die Außenseite der Plattenkörper 40 bzw. des Gehäuses 42, sodass die Backprodukte 2 aus den Backformen 4 entnommen werden können.

Die erfindungsgemäße Backvorrichtung umfasst bevorzugt ein Maschinengestell 43. Das Maschinengestell 43 ist bevorzugt starr mit der Drehkulisse 18, 22 verbunden. Insbesondere ist die Steuerkurve 19, 23 drehstarr mit ihrem Maschinengestell 43 verbunden. Durch Bewegung des Drehgestells 7 gegenüber dem Maschinengestell 43 wird somit auch eine Relativbewegung des Abtastelements 20, 24 gegenüber der Steuerkurve 19, 23 bewirkt. Dadurch werden die Abnahmeelemente 8, 12 bewegt. Dies geschieht insbesondere dadurch, dass die Abtastelemente 20, 24 einen Normalabstand 21, 47 zu den Schwenkachsen 9, 13 der Abnahmeelemente aufweisen.

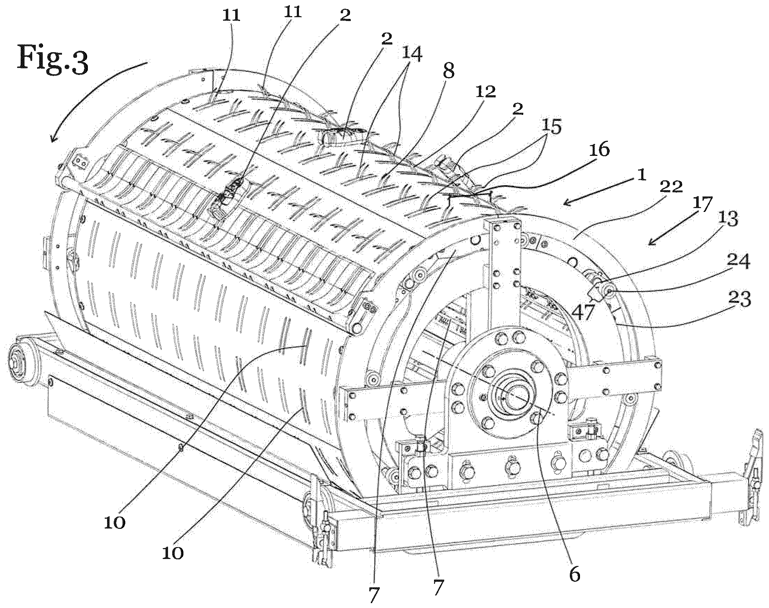

Fig. 3 zeigt eine weitere Ansicht einer Abnahmevorrichtung 1, insbesondere eine weitere Ansicht der Abnahmevorrichtung 1 aus Fig. 2, jedoch von der gegenüberliegenden Seite aus betrachtet. Die Merkmale der Fig. 3 ergeben sich insbesondere auch aus der Beschreibung der Fig. 2 und gegebenenfalls aus der Bezugszeichenliste. Die Abnahmevorrichtung 1 umfasst Abnahmegreifer 14 zur Abnahme der Backprodukte 2. Die Abnahmegreifer 14 weisen paarweise zusammenwirkende Abnahmeelemente 8, 12 auf. Die zweiten Abnahmeelemente 12 werden über die Steuervorrichtung 17, insbesondere über die zweite Drehkulisse 22, die zweiten Abtastelemente 24 und die zweite Steuerkurve 23 bewegt. Dadurch können sie von einer zurückgezogenen Stellung 10 in eine ausgefahrene Stellung 11 gebracht werden. Das Drehgestell 7 ist wiederum drehbar um eine Drehachse 6 angeordnet. Die einzelnen Abnahmeelemente 8, 12 sind bewegbar, insbesondere schwenkbar um eine jeweilige Schwenkachse 9, 13 angeordnet. Durch die Abnahmeelemente 8, 12 sind Abnahmegreifer 14 gebildet. Bevorzugt weisen die Abnahmegreifer eine oder mehrere Spitzen 15 auf. Der Abstand 16 zwischen den Spitzen 15 kann durch Bewegen des Abnahmegreifers 14 bzw. der Abnahmeelemente 8, 12 verändert werden, insbesondere um in das Backprodukt 2 einzustechen.

Das zweite Abtastelement 24 weist bevorzugt einen Normalabstand 47 zur zweiten Schwenkachse 13 auf. Durch diesen Normalabstand kann durch Bewegung des Abtastelements 24 ein Verschwenken der zweiten Abnahmeelemente 12 um die zweite Schwenkachse 13 bewirkt werden. Gleiches gilt bevorzugt auch für das Verschwenken der ersten Abnahmeelemente 8 um die erste Schwenkachse 9.

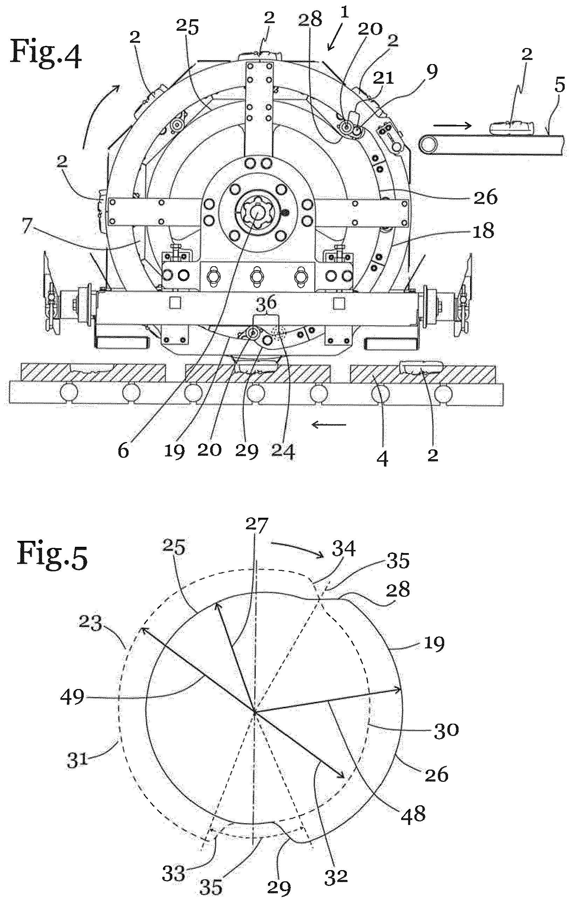

Fig. 4 zeigt eine schematische Seitenansicht einer erfindungsgemäßen Abnahmevorrichtung 1 bzw. einer erfindungsgemäßen Backvorrichtung. In den Backformen 4 sind im Bereich vor der Abnahmevorrichtung 1 Backprodukte 2 angeordnet. Im Bereich der Abnahmevorrichtung 1 werden die Backprodukte 2 abgenommen und zu einer Ausgabefläche 5 befördert, um auf dieser Ausgabefläche 5 abtransportiert werden zu können. Die Drehachse 6 des Drehgestells 7 verläuft in der vorliegenden Ausführungsform und Ansicht projizierend. Auch die Schwenkachsen 9, 13, insbesondere die in dieser Ansicht vordere Schwenkachse 9 der ersten Drehkulisse 18 verläuft ebenfalls projizierend.

Die erste Drehkulisse 18 umfasst eine erste Steuerkurve 19. Diese erste Steuerkurve 19 wird von einem ersten Abtastelement 20 abgefahren und dadurch abgetastet. Die erste Steuerkurve 19 umfasst einen ersten Steuerkurvenabschnitt 25 und einen zweiten Steuerkurvenabschnitt 26, wobei der mittlere Radius 27 des ersten Steuerkurvenabschnitts 25 kleiner ist als der mittlere Radius 48 des zweiten Steuerkurvenabschnitts 26. Am Übergang zwischen den beiden Steuerkurvenabschnitten 25, 46 sind ein erster Übergangsabschnitt 28 und ein zweiter Übergangsabschnitt 29 vorgesehen. Insbesondere im Bereich dieser Übergangsabschnitte 28, 29 geschieht eine Relativbewegung des Abtastelements gegenüber dem Drehgestell, beispielsweise eine Bewegung in radialer Richtung des Drehgestells, wodurch die Abnahmeelemente bewegt werden. Wie dem vorangegangenen Figuren zu entnehmen ist, umfasst gemäß der vorliegenden Ausführungsform die Steuerungsvorrichtung 17 mehrere Drehkulissen. Insbesondere sind zwei Drehkulissen 18, 22 beidseitig des Drehgestells 7 vorgesehen. Die erste Drehkulisse 18 ist dazu eingerichtet die ersten Abnahmeelemente 8 zu steuern und insbesondere zu bewegen. Die zweite Drehkulisse 22 ist dazu eingerichtet die zweiten Abnahmeelemente 12 zu steuern und insbesondere zu bewegen. Entlang des Umfangskreises des gedrehten Drehgestells 7 weisen die ersten Abnahmeelemente 8 eines einzelnen Abnahmegreifers 14 zu den zweiten Abnahmeelementen 12 einen gewissen Abstand auf. Gegebenenfalls weisen auch die Abtastelemente 20 und 24 entlang eines Umfangskreises einen gewissen Abstand zueinander auf. Um diesen Abstand zu kompensieren, insbesondere um ein gleichzeitiges Bewegen der ersten und der zweiten Abnahmeelemente 8, 12 zu bewirken, können auch die Steuerkurven 19, 23 bzw. die Übergangsabschnitte 28, 33 und 29, 34 gegenüber einander einen gewissen Versatz aufweisen.

Fig. 5 zeigt eine schematische Ansicht der Ausführung einer möglichen Ausführungsform der Steuerkurven. Die erste Steuerkurve 19 umfasst einen ersten Kurvenabschnitt 25 und einen zweiten Kurvenabschnitt 26. Der erste Steuerkurvenabschnitt 25 weist einen mittleren Radius 27 auf, der kleiner ist als der mittlere Radius 48 des zweiten Steuerkurvenabschnitts 26 der ersten Steuerkurve 19. Bevorzugt weist das erste Abtastelement 20 einen Normalabstand 21 zur ersten Schwenkachse 9 auf. Dieser Abstand ist bevorzugt als Nachlauf ausgestaltet. Dadurch befinden sich die ersten Abnahmeelemente 8 im Bereich des ersten Steuerkurvenabschnitts 25 in ihrer ausgefahrenen Stellung und im zweiten Steuerkurvenabschnitt 26 in ihrer zurückgezogenen Stellung. Die zweite Steuerkurve 23 umfasst ebenfalls einen ersten Steuerkurvenabschnitt 30 und einen zweiten Steuerkurvenabschnitt 31. Der mittlere Radius 32 des ersten Steuerkurvenabschnitts 30 ist kleiner als der mittlere Radius 49 des zweiten Steuerkurvenabschnitts 31. Ferner sind ein erster Übergangsabschnitt 33 und 34 vorgesehen. Auch die erste Steuerkurve 19 weist Übergangsabschnitte 28 und 29 auf. Auch die zweiten Abtastelemente 24 weisen einen Normalabstand 47 zur Schwenkachse 13 auf. Dieser Normalabstand ist ebenfalls bevorzugt als Nachlauf ausgebildet. Durch die Anordnung der Drehkulisse auf der anderen Seite des Drehgestells 7 wirkt die zweite Drehkulisse 22 gegebenenfalls umgekehrt wie die erste Drehkulisse 18. Bei der zweiten Steuerkurve 23 sind die zweiten Abnahmeelemente 12 im Bereich des ersten Steuerkurvenabschnitts 30 in ihrer zurückgezogenen Stellung und im Bereich ihrer zweiten Steuerkurvenabschnitte 31 in ihrer ausgefahrenen Stellung.

Die Übergangsabschnitte der beiden Steuerkurven können gegenüber einander versetzt angeordnet sein. Dadurch können unterschiedliche Effekte bewirkt werden. Entspricht der Abstand des Versatzes beispielsweise dem Abstand der Abtastelemente, so kann ein gleichzeitiges Öffnen bzw. Schließen der Elemente eines Abnahmegreifers bewirkt werden. Zur Ausgabe an die Ausgabefläche 5 kann beispielsweise der in Drehrichtung vordere Teil des Abnahmegreifers 14 bzw. dessen Abnahmeelemente zuerst in die zurückgefahrene Stellung befördert werden, um die Backprodukte 2 im vorderen Bereich zuerst loszulassen, um dann, im Anschluss, die Abnahmeelemente im hinteren Bereich zurückzuziehen.

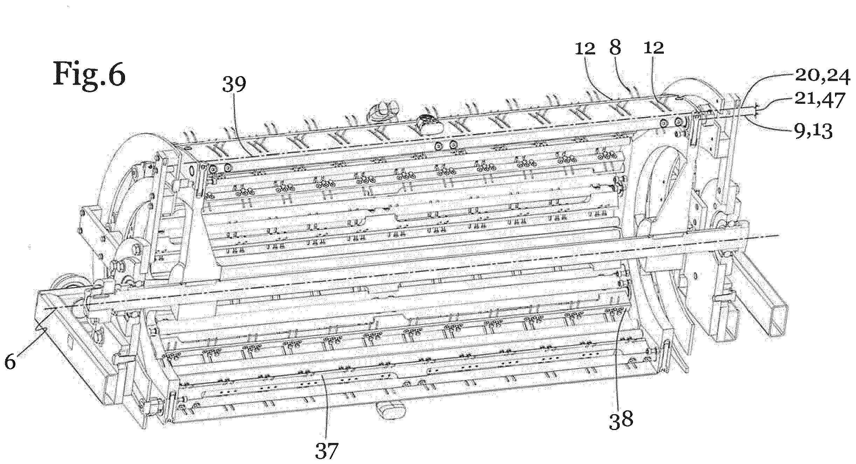

Fig. 6 zeigt eine schematische Schnittdarstellung einer Ausführungsform einer erfindungsgemäßen Abnahmevorrichtung 1. Gegebenenfalls entspricht die Abnahmevorrichtung 1 den Abnahmevorrichtungen aus den Figuren 1, 2, 3, 4 und/oder 5.

Die Abnahmeelemente 8, 12 sind bevorzugt um eine Schwenkachse 9, 13 schwenkbar angeordnet. Die Abtastelemente 20, 24 weisen einen Normalabstand 21, 47 zur Schwenkachse auf. Dadurch können die Abnahmeelemente 8, 12 verschwenkt werden. Bevorzugt sind mehrere erste Abnahmeelemente 8 an einem ersten Abnahmebalken 37 angeordnet. Gegebenenfalls sind mehrere erste Abnahmeelemente 8 durch einen Abnahmebalken 37 miteinander verbunden. Durch Bewegen dieses Abnahmebalkens 37 können mehrere erste Abnahmeelemente 8 bewegt werden. Auch die zweiten Abnahmeelemente 12 können an einem zweiten Abnahmebalken 38 vorgesehen sein. Entlang einer Parallelen zur Drehachse 6 des Drehgestells können somit Balkengreifer 39 gebildet sein. Die Abnahmebalken 37, 38 sind bevorzugt drehbar oder um die Schwenkachsen 9,13 schwenkbar am Drehgestell 7 gelagert. An den Abnahmebalken 37, 38 sind bevorzugt die Abnahmeelemente 8, 12 starr angebracht. Durch Verschwenken der Abnahmebalken um ihre Schwenkachsen 9, 13 kann somit die Bewegung der Abnahmeelemente 8, 12 bewirkt werden.

Gegebenenfalls können in allen Ausführungsformen entlang einer Parallelen zur Drehachse mehrere Abnahmeelemente durch jeweils einen Abnahmebalken verbunden sein. Durch das Vorsehen zweier paralleler Abnahmebalken kann somit ein Balkengreifer 39 gebildet sein. Gegebenenfalls sind entlang des Umfangs des Drehgestells 7 mehrere Balkengreifer 39 angeordnet.

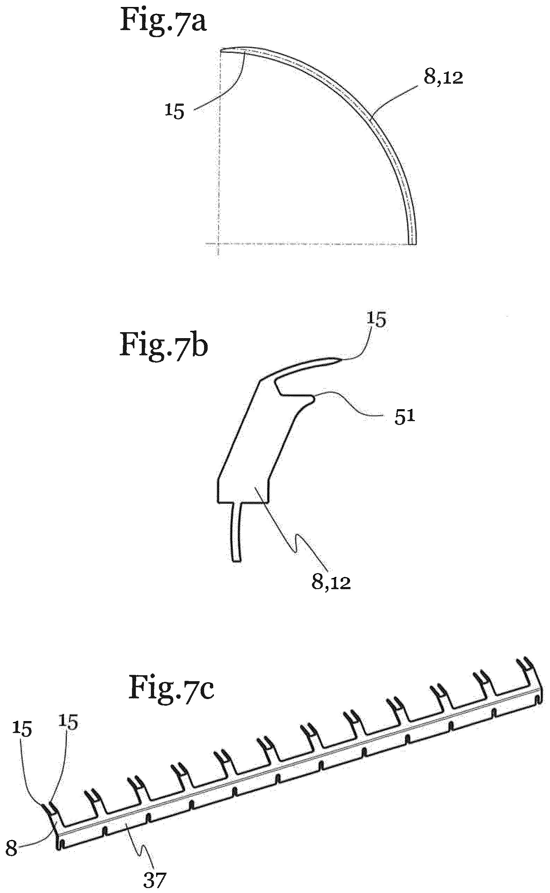

Fig. 7a zeigt eine Ausführungsform eines möglichen Abnahmeelements 8, 12. Das Abnahmeelement umfasst einen gebogenen, nadelförmigen Körper. Insbesondere umfasst das Abnahmeelement 8, 12 eine Spitze 15. Diese Spitze 15 ist gegebenenfalls bauchig angeschliffen. Die Spitze ist insbesondere dazu eingerichtet, in das Backprodukt 2 einzustechen. Die Spitzen 15 sind insbesondere an den freien Enden oder an dem freien Ende der Abnahmeelemente angeordnet. An ihren anderen Enden können sie beispielsweise mit einem Abnahmebalken verbunden sein.

Gegebenenfalls ist das Abnahmeelement 8, 12 gemäß Fig. 7b ausgebildet. Dieses umfasst wiederum eine Spitze 15. Zusätzlich kann auch ein Anschlag 51 vorgesehen sein. Dieser Anschlag 51 verhindert beispielsweise, dass die Spitze 15 zu tief in das Backprodukt 2 eindringen kann. Die Spitzen 15 sind insbesondere an den freien Enden oder an dem freien Ende der Abnahmeelemente angeordnet. An ihren anderen Enden können sie beispielsweise mit einem Abnahmebalken verbunden sein.

Fig. 7c zeigt eine weitere Ausführungsform, in der die Abnahmeelemente einstückig mit einem Abnahmebalken verbunden sind. Beispielsweise können erste Abnahmeelemente 8 mit einem ersten Abnahmebalken 37 verbunden sein. Pro erstem Abnahmeelement 8 sind gegebenenfalls mehrere Spitzen 15 vorgesehen. Eine derartige Konfiguration kann in allen Ausführungsformen vorliegen. So können in allen Ausführungsformen pro Abnahmeelement mehrere Spitzen vorgesehen sein. Gegebenenfalls können auch in allen Ausführungsformen mehrere Abnahmeelemente über einen Abnahmebalken miteinander verbunden sein. Gegebenenfalls können in allen Ausführungsformen die Abnahmeelemente einstückig mit dem Abnahmebalken verbunden sein. Gegebenenfalls sind die Abnahmeelemente mit dem Abnahmebalken form- oder kraftschlüssig verbunden. Beispielsweise kann diese Verbindung über Klemmverbindungen, Steckverbindungen oder ähnliche Verbindungen ausgebildet sein. Auch stoffschlüssige Verbindungen wie beispielsweise Klebeverbindungen oder Schweißverbindungen können zur Befestigung der Abnahmeelemente am Abnahmebalken vorgesehen sein.

In weiterer Folge wird ein exemplarisches Verfahren zur Herstellung und zur Abnahme eines oder mehrerer Backprodukte durch eine erfindungsgemäße Abnahmevorrichtung oder eine erfindungsgemäße Backvorrichtung beschrieben.

In einem ersten Schritt wird ein Teig oder eine Backmasse auf eine vorgewärmte oder heiße Backzange aufgetragen. Die Backzange umfasst bevorzugt Kavitäten, die insbesondere in zugeklappter Stellung, aber auch in aufgeklappter Stellung eine Backform bilden. In diese Backform wird ein Teig oder eine Backmasse zur Herstellung der Backprodukte eingebracht. Dies geschieht bevorzugt in der Beschickungsvorrichtung.

Gegebenenfalls handelt es sich bei dem Backprodukt um ein gefülltes Backprodukt. In diesem Fall ist eine Füllvorrichtung vorgesehen. Die Füllung kann beispielsweise dadurch erzielt werden, dass auf den in der aufgeklappten Backzange befindlichen Teig eine vorbestimmte Menge einer Füllung, beispielsweise einer Creme, zentral aufgetragen wird. Dabei sind gegebenenfalls beide Backplatten der Backzange mit einem Teig zumindest teilweise befüllt, um zwei Teigformen zu bilden. In einem weiteren Schritt wird die Backzange geschlossen. Dadurch wird die Füllung, insbesondere die Cremefüllung zwischen den zwei Teigformen eingeschlossen. Im nachträglichen Backschritt backen die beiden Teigformen zusammen, sodass ein Füllraum gebildet ist.

Gegebenenfalls wird die Füllung durch Injektion in die Mitte einer Teigform eingebracht. Bevorzugt wird das Backprodukt in einer geschlossenen Backform gebacken, sodass auch die Füllung zur Gänze eingeschlossen ist.

Im Backschritt wird die Backform durch einen bevorzugt wärmeisolierten Backraum befördert. Dabei wird die Backform bzw. die Backzange entlang eines Endlosförderers und entlang einer oberen, ersten Förderfläche bis zu einem hinteren Umlenkpunkt, zu einer unteren, zweiten Förderfläche, zu einem vorderen Umlenkpunkt und dort wieder zur ersten, oberen Förderfläche befördert. Entlang dieses Weges, insbesondere entlang der ersten, oberen Förderfläche ist in weiterer Folge eine Vorrichtung zum Aufklappen der Backzangen bzw. der Backformen vorgesehen. In diesem Bereich wird die Backzange aufgeklappt, sodass das fertige Backprodukt entnommen werden kann. Zur Entnahme der Backprodukte aus der Backform ist die erfindungsgemäße Abnahmevorrichtung vorgesehen. Diese weist bevorzugt ein Drehgestell auf. Das Drehgestell rotiert um eine Drehachse, sodass durch die Rotation des Drehgestells die Backprodukte aus der Backform entnommen werden können. Dazu werden in einem ersten vorangegangenen Schritt die Abnahmeelemente in eine zurückgezogene Stellung gebracht. In weiterer Folge werden diese Abnahmeelemente in Richtung jener Backform gedreht oder bewegt, aus der das Backprodukt entnommen werden soll. Sind die Abnahmeelemente im Bereich der Backform angekommen, so wird die Steuervorrichtung betätigt, womit die Abnahmeelemente von der zurückgezogenen Stellung in eine nach außen ausgefahrene Stellung bewegt werden. Durch das paarweise Zusammenwirken der beiden Abnahmeelemente ist ein Abnahmegreifer gebildet. Zumindest eines der beiden Abnahmeelemente weist eine Spitze auf, die in das abzunehmende Backprodukt eingestochen wird. Die Spitze des zumindest einen Abnahmeelements wird jedoch nur soweit eingestochen, dass der Füllraum bzw. die Füllung nicht perforiert wird. Bevorzugt werden zwei Abnahmeelemente beidseitig des Backproduktes in dieses eingestochen. Jedoch wird die Einstechbewegung der Abnahmeelemente gestoppt, bevor diese in den Füllraum eindringen. In weiterer Folge wird das Drehgestell weitergedreht, sodass das Backprodukt durch die Kreisbahn des Abnahmegreifers abgehoben und insbesondere aus der Backform entfernt wird. Dadurch wird das abgenommene Backprodukt entlang dieser Kreisbahn weiterbefördert, bis es sich im Bereich der Ausgabefläche befindet. In diesem Bereich werden die Abnahmeelemente wiederum in eine zurückgezogene Stellung gebracht, wodurch die Spitzen der Abnahmeelemente oder die einzelne Spitze der Abnahmeelemente aus dem Backprodukt gezogen werden. Dadurch wird das Backprodukt von dem Drehgestell gelöst und es kann über die Ausgabefläche abgeführt werden.

In weiterer Folge kommt der Abnahmegreifer, der das Backprodukt auf der Ausgabefläche abgelegt hat, zu einer weiteren Backform, aus der wiederum durch Ausfahren der Abnahmeelemente ein Backprodukt abgenommen werden kann.

Bevorzugt werden mehrere Abnahmegreifer gleichzeitig betätigt, sodass mehrere nebeneinander angeordnete Backprodukte aus einer Backform oder aus mehreren Backformen entnommen werden können. Bevorzugt sind mehrere derartige Balkengreifer entlang des Umfangs des Drehgestells angeordnet.

Bevorzugt werden die Backprodukte kontinuierlich und während einer kontinuierlichen Fortbewegung der Backprodukte aus den Backformen entnommen. Dazu wird bevorzugt das Drehgestell kontinuierlich gedreht. Ferner wird bevorzugt die Backform oder werden die Backformen kontinuierlich bewegt.

Gegebenenfalls sind die Drehkulissen in allen Ausführungsformen als endlose Kulissen und insbesondere als kontinuierlich abgetastete endlose Kulissen ausgebildet. Gegebenenfalls sind alle Ausführungsformen der Abnahmevorrichtung dazu eingerichtet, gefüllte Backprodukte mit einer innerhalb des Backproduktes in einem Füllraum vorgesehenen Füllung perforationsfrei, also den Füllraum nicht perforierend, von einer Backform abzunehmen.

Gegebenenfalls zeigen alle Figuren 1 bis 4 eine einzige Ausführungsform der Erfindung.

### Bezugszeichenliste

1. Abnahmevorrichtung
2. Backprodukt
3. Förderfläche der Backformen
4. Backform
5. Ausgabefläche
6. Drehachse des Drehgestells
7. Drehgestell
8. erstes Abnahmeelement
9. erste Schwenkachse
10. zurückgezogene Stellung
11. ausgefahrene Stellung
12. zweites Abnahmeelement
13. zweite Schwenkachse
14. Abnahmegreifer
15. Spitze des Abnahmeelements
16. Abstand zwischen den Spitzen
17. Steuerungsvorrichtung
18. erste Drehkulisse
19. erste Steuerkurve
20. erstes Abtastelement
21. Normalabstand zwischen erstem Abtastelement und erster Schwenkachse
22. zweite Drehkulisse
23. zweite Steuerkurve
24. zweites Abtastelement
25. erster Steuerkurvenabschnitt der ersten Steuerkurve
26. zweiter Steuerkurvenabschnitt der ersten Steuerkurve
27. mittlerer Radius des ersten Steuerkurvenabschnitts der ersten Steuerkurve
28. erster Übergangsabschnitt der ersten Steuerkurve
29. zweiter Übergangsabschnitt der ersten Steuerkurve
30. erster Steuerkurvenabschnitt der zweiten Steuerkurve
31. zweiter Steuerkurvenabschnitt der zweiten Steuerkurve
32. mittlerer Radius des ersten Steuerkurvenabschnitts der zweiten Steuerkurve
33. erster Übergangsabschnitt der zweiten Steuerkurve
34. zweiter Übergangsabschnitt der zweiten Steuerkurve
35. Abstand des Versatzes
36. Abstand des ersten Abtastelements zum zweiten Abtastelement
37. erster Abnahmebalken
38. zweiter Abnahmebalken
39. Balkengreifer
40. Plattenkörper
41. Öffnung
42. Gehäuse
43. Maschinengestell
44. Backzange
45. Beschickungsvorrichtung
46. Backraum
47. Normalabstand zwischen zweitem Abtastelement und zweiter Schwenkachse
48. mittlerer Radius des zweiten Steuerkurvenabschnitts der ersten Steuerkurve
49. mittlerer Radius des zweiten Steuerkurvenabschnitts der zweiten Steuerkurve
50. Füllvorrichtung
51. Anschlag

## Patentansprüche

1. Abnahmevorrichtung (1) zur kontinuierlichen Abnahme von gefüllten Backprodukten (2) aus entlang einer Förderfläche (3) bewegten Backformen (4) und zum kontinuierlichen Transport der Backprodukte (2) zu einer Ausgabefläche (5), wobei die Abnahmevorrichtung (1) ein um eine Drehachse (6) drehbar gelagertes, antreibbares und gegebenenfalls angetriebenes Drehgestell (7) umfasst,
- wobei am Drehgestell (7) und mit dem Drehgestell (7) mitdrehbar ein erstes Abnahmeelement (8) vorgesehen ist,
- wobei das erste Abnahmeelement (8) bewegbar, insbesondere um eine erste Schwenkachse (9) schwenkbar, gegenüber dem Drehgestell (7) gelagert ist, sodass das erste Abnahmeelement (8) von einer zurückgezogenen Stellung (10) in eine nach außen ausgefahrene Stellung (11) bringbar ist,
- wobei am Drehgestell (7) und mit dem Drehgestell (7) mitdrehbar ein zweites Abnahmeelement (12) vorgesehen ist,
- wobei das zweite Abnahmeelement (12) bewegbar, insbesondere um eine zweite Schwenkachse (13) schwenkbar, gegenüber dem Drehgestell (7) gelagert ist, sodass das zweite Abnahmeelement (12) von einer zurückgezogenen Stellung (10) in eine nach außen ausgefahrene Stellung (11) bringbar ist,
- wobei das erste Abnahmeelement (8) und das zweite Abnahmeelement (12) paarweise einen Abnahmegreifer (14) bilden,
- wobei eine Steuerungsvorrichtung (17) zur Bewegung der Abnahmeelemente (8, 12) von der zurückgezogenen Stellung (10) in die nach außen ausgefahrene Stellung (11) und von der nach außen ausgefahrenen Stellung (11) in die zurückgezogene Stellung (10) und zum Öffnen und Schließen des Abnahmegreifers (14) vorgesehen ist, **dadurch gekennzeichnet, dass** die Steuerungsvorrichtung (17) eine erste Drehkulisse (18) mit einer ersten Steuerkurve (19) und ein entlang der ersten Steuerkurve (19) geführtes erstes Abtastelement (20) umfasst, und dass das erste Abtastelement (20) einen Normalabstand (21), und insbesondere einen Nachlauf, zur ersten Schwenkachse (9) aufweist und mit dem ersten Abnahmeelement (8) verbunden ist, sodass durch Bewegung des ersten Abtastelements (20) das erste Abnahmeelement (8) von der zurückgezogenen Stellung (10) in die nach außen ausgefahrene Stellung (11) und von der nach außen ausgefahrenen Stellung (11) in die zurückgezogene Stellung (10) bewegbar ist.

2. Abnahmevorrichtung (1) nach Anspruch 1, **dadurch gekennzeichnet, dass** die Steuerungsvorrichtung (17) eine zweite Drehkulisse (22) mit einer zweiten Steuerkurve (23) und ein entlang der zweiten Steuerkurve (23) geführtes zweites Abtastelement (24) umfasst, und dass das zweite Abtastelement (24) einen Normalabstand (47), und insbesondere einen Nachlauf zur zweiten Schwenkachse (13), aufweist, und mit dem zweiten Abnahmeelement (12) verbunden ist, sodass durch Bewegung des zweiten Abtastelements (24) das zweite Abnahmeelement (12) von der zurückgezogenen Stellung (10) in die nach außen ausgefahrene Stellung (11) und von der nach außen ausgefahrenen Stellung (11) in die zurückgezogene Stellung (10) bewegbar ist.

3. Abnahmevorrichtung (1) nach Anspruch 1 oder 2, **dadurch gekennzeichnet, dass** eines der beiden Abnahmeelemente (8, 12) an seinem freien Ende mit einer Spitze (15) versehen ist, oder dass beide Abnahmeelemente (8, 12) an ihren freien Enden mit jeweils einer Spitze (15) versehen sind, wobei die Spitze (15) dazu eingerichtet ist, in das abzunehmende Backprodukt (2) einzustechen.

4. Abnahmevorrichtung (1) nach Anspruch 3, **dadurch gekennzeichnet, dass** der Abstand zwischen der Spitze (15) des ersten Abnahmeelements (8) und der Spitze (15) des zweiten Abnahmeelements (12) in der ausgefahrenen Stellung (11) größer als null ist, sodass sich die Spitzen (15) beim Ausfahren weder kreuzen noch berühren und insbesondere entfernt von der Cremefüllung des Backproduktes (2) in das Backprodukt (2) eingestochen sind.

5. Abnahmevorrichtung (1) nach einem der Ansprüche 1 bis 4, **dadurch gekennzeichnet, dass** der Abnahmegreifer (14) ein erstes Abnahmeelement (8) und ein zweites Abnahmeelement (12) umfasst, und dass eines der beiden Abnahmeelemente (8, 12), und insbesondere dessen Spitze (15), in seiner ausgefahrenen Stellung (11) in Drehrichtung des Drehgestells (7) weist, und dass das andere Abnahmeelement (8, 12) und insbesondere dessen Spitze (15) in seiner ausgefahrenen Stellung (11) gegen die Drehrichtung des Drehgestells weist, sodass die beiden Abnahmeelemente (8, 12), und insbesondere deren Spitzen (15), in der ausgefahrenen Stellung (11) zueinander weisen.

6. Abnahmevorrichtung (1) nach einem der Ansprüche 1 bis 5, **dadurch gekennzeichnet, dass** die Spitze des Abnahmeelements (8, 12) in der ausgefahrenen Stellung (11) im Wesentlichen in tangentiale Richtung des Drehgestells (7) weist, oder dass die Spitzen der Abnahmeelemente (8, 12) in ihrer ausgefahrenen Stellung (11) im Wesentlichen in tangentiale Richtung des Drehgestells (7) weisen.

7. Abnahmevorrichtung (1) nach einem der Ansprüche 1 bis 6, **dadurch gekennzeichnet, dass** das erste Abnahmeelement (8) gegenüber dem Drehgestell (7) um eine erste Schwenkachse (9) schwenkbar angeordnet ist, wobei die erste Schwenkachse (9) beabstandet von der Drehachse (6) des Drehgestells (7) am Drehgestell (7) angeordnet ist und/oder dass das zweite Abnahmeelement (12) gegenüber dem Drehgestell (7) um eine zweite Schwenkachse (13) schwenkbar angeordnet ist, wobei die zweite Schwenkachse (13) beabstandet von der Drehachse (6) des Drehgestells (7) am Drehgestell (7) angeordnet ist
und dass die erste Schwenkachse (9) und die zweite Schwenkachse (13) insbesondere parallel voneinander entfernt am Drehgestell (7) angeordnet sind.

8. Abnahmevorrichtung (1) nach einem der Ansprüche 1 bis 7, **dadurch gekennzeichnet, dass** die erste Schwenkachse (9) und/oder die zweite Schwenkachse (13) parallel beabstandet zur Drehachse (6) des Drehgestells (7) angeordnet ist oder sind, sodass die Abnahmeelemente (8, 12) des Abnahmegreifers (14) entlang einer Normalebene der Drehachse (6) des Drehgestells (7) in entgegengesetzte Richtungen greiferartig zueinander bewegbar angeordnet sind, und dass die Abnahmeelemente (8, 12) des Abnahmegreifers (14) gegebenenfalls entlang einer Normalebene der Drehachse (6) des Drehgestells (7) verlaufen.

9. Abnahmevorrichtung (1) nach einem der Ansprüche 1 bis 8, **dadurch gekennzeichnet, dass** die **erste** Steuerkurve (19) einen ersten Steuerkurvenabschnitt (25) und einen zweiten Steuerkurvenabschnitt (26) aufweist, wobei der mittlere Radius (27) des ersten Steuerkurvenabschnitts (25) kleiner ist als der mittlere Radius (48) des zweiten Steuerkurvenabschnitts (26), dass am Übergang vom ersten Steuerkurvenabschnitt (25) auf den zweiten Steuerkurvenabschnitt (26) ein die beiden Steuerkurvenabschnitte (25, 26) verbindender erster Übergangsabschnitt (28) vorgesehen ist und dass am Übergang vom zweiten Steuerkurvenabschnitt (26) auf den ersten Steuerkurvenabschnitt (25) ein die beiden Steuerkurvenabschnitte (25, 26) verbindender zweiter Übergangsabschnitt (29) vorgesehen ist.

10. Abnahmevorrichtung nach einem der Ansprüche 2 bis 9, **dadurch gekennzeichnet, dass** die **zweite** Steuerkurve (23) einen ersten Steuerkurvenabschnitt (30) und einen zweiten Steuerkurvenabschnitt (31) aufweist, wobei der mittlere Radius (32) des ersten Steuerkurvenabschnitts (30) kleiner ist als der mittlere Radius (49) des zweiten Steuerkurvenabschnitts (31), dass am Übergang vom ersten Steuerkurvenabschnitt (30) auf den zweiten Steuerkurvenabschnitt (31) ein die beiden Steuerkurvenabschnitte (30, 31) verbindender erster Übergangsabschnitt (33) vorgesehen ist und dass am Übergang vom zweiten Steuerkurvenabschnitt (31) auf den ersten Steuerkurvenabschnitt (30) ein die beiden Steuerkurvenabschnitte (30, 31) verbindender zweiter Übergangsabschnitt (34) vorgesehen ist.

11. Abnahmevorrichtung (1) nach einem der Ansprüche 2 bis 10, **dadurch gekennzeichnet, dass** zur Abnahme der Backprodukte (2) ein Übergangsabschnitt (28, 29) der ersten Steuerkurve (19) und ein Übergangsabschnitt (33, 34) der zweiten Steuerkurve (23) in Umfangsrichtung des Drehgestells (7) versetzt zueinander angeordnet sind, wobei der Abstand (35) des Versatzes im Wesentlichen dem Abstand (36) des ersten Abtastelements (20) zum zweiten Abtastelement (24) entspricht, sodass die beiden Abnahmeelemente (8, 12) eines Abnahmegreifers (14) gleichzeitig zueinander bewegt oder geschwenkt werden, um den Abnahmegreifer (14) zu schließen.

12. Abnahmevorrichtung (1) nach einem der Ansprüche 2 bis 11, **dadurch gekennzeichnet, dass** zur Ausgabe der Backprodukte (2) an die Ausgabefläche (5) ein Übergangsabschnitt (28, 29) der ersten Steuerkurve (19) und ein Übergangsabschnitt (33, 34) der zweiten Steuerkurve (23) in Umfangsrichtung des Drehgestells (7) derart zueinander angeordnet sind, dass das in Drehrichtung des Drehgestells (7) vordere Abnahmeelement vor dem in Drehrichtung des Drehgestells (7) hinteren Abnahmeelement von der nach außen ausgefahrenen Stellung (11) in die zurückgezogene Stellung (10) bewegt wird oder ist.

13. Abnahmevorrichtung nach einem der Ansprüche 1 bis 12, **dadurch gekennzeichnet, dass** mehrere erste Abnahmeelemente (8) über einen ersten Abnahmebalken (37) miteinander verbunden sind und dass mehrere zweite Abnahmeelemente (12) über einen zweiten Abnahmebalken (38) miteinander verbunden sind.

14. Abnahmevorrichtung (1) nach einem der Ansprüche 2 bis 13, **dadurch gekennzeichnet, dass** mehrere erste Abnahmeelemente (8) über einen ersten Abnahmebalken (37) miteinander verbunden sind, dass mehrere zweite Abnahmeelemente (12) über einen zweiten Abnahmebalken (38) miteinander verbunden sind,
dass der erste Abnahmebalken (37) um die erste Schwenkachse (9) schwenkbar mit dem Drehgestell (7) verbunden ist und über das erste Abtastelement (20) der Steuervorrichtung (17) gegenüber dem Drehgestell (7) schwenkbar ist, und dass der zweite Abnahmebalken (38) um die zweite Schwenkachse (13) schwenkbar mit dem Drehgestell (7) verbunden ist und über das zweite Abtastelement (24) der Steuervorrichtung (17) gegenüber dem Drehgestell (7) schwenkbar ist.

15. Abnahmevorrichtung (1) nach Anspruch 14, **dadurch gekennzeichnet, dass** die über den ersten Abnahmebalken (37) verbundenen und angesteuerten ersten Abnahmeelemente (8) und die über den zweiten Abnahmebalken (38) verbundenen und angesteuerten zweiten Abnahmeelemente zusammen einen Balkengreifer (39) zur Abnahme mehrerer Backprodukte (2) bilden,
und dass entlang der Umfangsrichtung des Drehgestells (7) mehrere Balkengreifer (39) vorgesehen sind.

16. Abnahmevorrichtung (1) nach einem der Ansprüche 1 bis 15, **dadurch gekennzeichnet, dass** im Außenbereich des Drehgestells (7) zumindest ein Plattenkörper (40) vorgesehen ist, der mit dem Drehgestell (7) starr verbunden ist, wobei der Plattenkörper (40) Öffnungen (41) zur Durchführung der Abnahmeelemente (8, 12) aufweist, und dass mehrere Plattenkörper (40) vorgesehen sind, die zusammen ein Gehäuse (42) bilden oder dass ein einziger gekrümmter Plattenkörper (40) ein Gehäuse (42) bildet.

17. **Backvorrichtung** zur Herstellung von Backprodukten (2), insbesondere zur Herstellung cremegefüllter Backprodukte (2), wobei die Backvorrichtung auf- und zuklappbare Backzangen (44) umfassende Backformen (4) aufweist, die auf einem in Längsrichtung eines Maschinengestells (43) des Backofens umlaufenden und kontinuierlich bewegten Endlosförderer entlang einer Förderfläche (3) von einer Beschickungsvorrichtung (45) durch einen Backraum (46) und zu einer Abnahmevorrichtung (1) bewegbar sind, wobei eine Ausgabefläche (5) zum Abtransport der Backprodukte (2) aus der Backvorrichtung vorgesehen ist, **dadurch gekennzeichnet,**
- **dass** eine Abnahmevorrichtung (1) zur kontinuierlichen Abnahme der cremegefüllten Backprodukte (2) aus den Backformen (4) und zum kontinuierlichen Transport der Backprodukte (2) zur Ausgabefläche (5) vorgesehen ist,
- und **dass** die Abnahmevorrichtung (1) nach einem der Ansprüche 1 bis 16 ausgebildet ist.

18. Backvorrichtung nach Anspruch 17, **dadurch gekennzeichnet, dass** die Drehung des Drehgestells (7) mit der Bewegung der Backformen (4) synchronisiert ist, sodass die Geschwindigkeit der Abnahmeelemente (8, 12) im Bereich der Backformen (4) im Wesentlichen gleich ist wie die Geschwindigkeit der Backformen (4).

19. Backvorrichtung nach Anspruch 17 oder 18, **dadurch gekennzeichnet, dass** die Drehkulisse oder die Drehkulissen (18, 22) der Abnahmevorrichtung (1) starr mit dem Maschinengestell (43) verbunden ist oder sind.

20. Backvorrichtung nach einem der Ansprüche 17 bis 19, **dadurch gekennzeichnet, dass** die Abnahmegreifer (14) im Bereich unmittelbar vor der Ausgabefläche (5) geschlossen sind und dass die Abnahmegreifer (14) im Bereich unmittelbar nach der Ausgabefläche (5) geöffnet sind, sodass ein oder mehrere Backprodukte (2) von den Abnahmegreifern (14) auf die Ausgabefläche (5) ausgegeben werden.

21. Backvorrichtung nach einem der Ansprüche 17 bis 20, **dadurch gekennzeichnet, dass** die Abnahmegreifer (14) im Bereich unmittelbar vor der Backform (4) geöffnet sind und dass die Abnahmegreifer (14) im Bereich unmittelbar nach der Backform (4) geschlossen sind, sodass ein oder mehrere Backprodukte (2) von einem oder mehreren Abnahmegreifern (14) aus der Backform (4) entnommen werden.

22. **Verfahren** zur Herstellung und/oder zur kontinuierlichen Abnahme gefüllter Backprodukte aus entlang einer Förderfläche bewegten Backformen und zum kontinuierlichen Transport der Backprodukte zu einer Ausgabefläche umfassend folgende Schritte:
- Drehen des Drehgestells um seine Drehachse;
- Zurückziehen zweier Abnahmeelemente in eine zurückgezogene Stellung;
- Drehung der Abnahmeelemente in Richtung jener Backform, aus der das Backprodukt entnommen werden soll;
- Betätigen der Steuervorrichtung, wenn die Abnahmeelemente im Bereich dieser Backform angekommen sind, womit die Abnahmeelemente von der zurückgezogenen Stellung in eine nach außen ausgefahrene Stellung bewegt werden;
- Einstechen der Spitze zumindest eines Abnahmeelements in das Backprodukt durch Bewegung des Abnahmeelements, wobei bevorzugt zwei Abnahmeelemente beidseitig des Backproduktes in dieses eingestochen werden;
- Stoppen der Einstechbewegung der Abnahmeelemente, bevor diese in den Füllraum eindringen, sodass der Füllraum nicht perforiert wird,
- Weiterdrehen des Drehgestells, sodass das Backprodukt auf der Kreisbahn der Abnahmeelemente abgehoben und insbesondere aus der Backform entfernt wird,
- Weiterbefördern des abgenommenen Backprodukts entlang dieser Kreisbahn, bis es sich im Bereich der Ausgabefläche befindet;
- Zurückziehen der Abnahmeelemente in eine zurückgezogene Stellung, wodurch die Spitze des Abnahmeelements oder die Spitzen der Abnahmeelemente aus dem Backprodukt gezogen werden, sodass das Backprodukt von dem Drehgestell gelöst wird und es über die Ausgabefläche abgeführt werden kann.

23. Verfahren nach Anspruch 22, **dadurch gekennzeichnet, dass**
- in einem ersten Schritt ein Teig oder eine Backmasse auf beide Backplatten einer aufgeklappten Backzange aufgetragen wird,
- in einem nachfolgende Schritt eine Füllung, wie beispielsweise eine Creme, eine Fettcreme oder eine Konfitüre auf zumindest eine Backplatte der Backzange, und insbesondere auf einen auf der Backplatte aufgetragenen Teig, oder auf eine auf der Backplatte aufgetragene Backmasse zentral aufgetragen wird,
- in einem nachfolgende Schritt die Backzange geschlossen wird, wodurch die die Füllung zwischen den zwei Teigformen oder Backmassenformen eingeschlossen wird,
- in einem nachfolgenden Schritt die zwei Teigformen oder Backmassenformen durch Backen in einem Backraum verbunden werden,
- und die so gebildeten gefüllten Backprodukte mit einem darin angeordneten Füllraum abgenommen werden.

## Claims

1. A removal device (1) for the continuous removal of filled baked products (2) from baking moulds (4) moved along a conveying surface (3) and for the continuous transport of the baked products (2) to a dispensing surface (5), wherein the removal device (1) comprises a drivable and optionally driven rotary unit (7) which is rotatably mounted about a rotational axis (6),
- wherein a first removal element (8) is provided on the rotary unit (7) and is co-rotatable with the rotary unit (7),
- wherein the first removal element (8) is movably mounted relative to the rotary unit (7), in particular pivotably mounted about a first pivot axis (9), so that the first removal element (8) is able to be brought from a retracted position (10) into an outwardly extended position (11),
- wherein a second removal element (12) is provided on the rotary unit (7) and is co-rotatable with the rotary unit (7),
- wherein the second removal element (12) is movably mounted relative to the rotary unit (7), in particular pivotably mounted about a second pivot axis (13), so that the second removal element (12) is able to be brought from a retracted position (10) into an outwardly extended position (11),
- wherein the first removal element (8) and the second removal element (12) in pairs form a removal gripper (14),
- wherein a control device (17) is provided for moving the removal elements (8, 12) from the retracted position (10) into the outwardly extended position (11) and from the outwardly extended position (11) into the retracted position (10) and for opening and closing the removal gripper (14),
**characterised in that** the control device (17) comprises a first rotary link (18) with a first control cam (19) and a first scanning element (20) guided along the first control cam (19), and **in that** the first scanning element (20) has a normal distance (21) and, in particular, a lag relative to the first pivot axis (9) and is connected to the first removal element (8) so that by the movement of the first scanning element (20) the first removal element (8) is movable from the retracted position (10) into the outwardly extended position (11) and from the outwardly extended position (11) into the retracted position (10) .

2. The removal device (1) according to Claim 1, **characterised in that** the control device (17) comprises a second rotary link (22) with a second control cam (23) and a second scanning element (24) guided along the second control cam (23), and **in that** the second scanning element (24) has a normal distance (47) and, in particular, a lag relative to the second pivot axis (13) and is connected to the second removal element (12) so that by the movement of the second scanning element (24) the second removal element (12) is movable from the retracted position (10) into the outwardly extended position (11) and from the outwardly extended position (11) into the retracted position (10).

3. The removal device (1) according to Claim 1 or 2, **characterised in that** one of the two removal elements (8, 12) is provided at its free end with a tip (15) or **in that** both removal elements (8, 12) are provided at their free ends with one respective tip (15), wherein the tip (15) is designed to prick into the baked product (2) to be removed.

4. The removal device (1) according to Claim 3, **characterised in that** the distance between the tip (15) of the first removal element (8) and the tip (15) of the second removal element (12) in the extended position (11) is greater than zero, so that when extended the tips (15) neither cross nor come into contact with one another and, in particular, are pricked into the baked product (2) at a distance from the cream filling of the baked product (2).

5. The removal device (1) according to one of Claims 1 to 4, **characterised in that** the removal gripper (14) comprises a first removal element (8) and a second removal element (12) and **in that** one of the two removal elements (8, 12) and, in particular, the tip thereof (15) in its extended position (11) faces in the rotational direction of the rotary unit (7), and **in that** the other removal element (8, 12) and, in particular, the tip thereof (15) in its extended position (11) faces counter to the rotational direction of the rotary unit so that the two removal elements (8, 12) and, in particular, the tips thereof (15) face one another in the extended position (11).

6. The removal device (1) according to one of Claims 1 to 5, **characterised in that** the tip of the removal element (8, 12) in the extended position (11) faces substantially in the tangential direction of the rotary unit (7) or **in that** the tips of the removal elements (8, 12) in their extended position (11) face substantially in the tangential direction of the rotary unit (7).

7. The removal device (1) according to one of Claims 1 to 6, **characterised in that** the first removal element (8) is pivotably arranged about a first pivot axis (9) relative to the rotary unit (7), wherein the first pivot axis (9) is arranged on the rotary unit (7), at a distance from the rotational axis (6) of the rotary unit (7), and/or in that the second removal element (12) is pivotably arranged about a second pivot axis (13) relative to the rotary unit (7), wherein the second pivot axis (13) is arranged on the rotary unit (7), at a distance from the rotational axis (6) of the rotary unit (7),
and **in that** the first pivot axis (9) and the second pivot axis (13) are arranged, in particular, in parallel at a distance from one another on the rotary unit (7).

8. The removal device (1) according to one of Claims 1 to 7, **characterised in that** the first pivot axis (9) and/or the second pivot axis (13) is or are arranged in parallel at a distance from the rotational axis (6) of the rotary unit (7), so that the removal elements (8, 12) of the removal gripper (14) are movably arranged along a normal plane of the rotational axis (6) of the rotary unit (7) in opposing directions in a gripper-like manner relative to one another, and **in that** the removal elements (8, 12) of the removal gripper (14) optionally extend along a normal plane of the rotational axis (6) of the rotary unit (7).

9. The removal device (1) according to one of Claims 1 to 8, **characterised in that** the first control cam (19) comprises a first control cam portion (25) and a second control cam portion (26), wherein the mean radius (27) of the first control cam portion (25) is smaller than the mean radius (48) of the second control cam portion (26), **in that** at the transition from the first control cam portion (25) to the second control cam portion (26) a first transition portion (28) connecting the two control cam portions (25, 26) is provided and **in that** at the transition from the second control cam portion (26) to the first control cam portion (25) a second transition portion (29) connecting the two control cam portions (25, 26) is provided.

10. The removal device according to one of Claims 2 to 9, **characterised in that** the second control cam (23) comprises a first control cam portion (30) and a second control cam portion (31), wherein the mean radius (32) of the first control cam portion (30) is smaller than the mean radius (49) of the second control cam portion (31), **in that** at the transition from the first control cam portion (30) to the second control cam portion (31) a first transition portion (33) connecting the two control cam portions (30, 31) is provided, and **in that** at the transition from the second control cam portion (31) to the first control cam portion (30) a second transition portion (34) connecting the two control cam portions (30, 31) is provided.

11. The removal device (1) according to one of Claims 2 to 10, **characterised in that** for removing the baked products (2) a transition portion (28, 29) of the first control cam (19) and a transition portion (33, 34) of the second control cam (23) are arranged offset to one another in the circumferential direction of the rotary unit (7), wherein the distance (35) of the offset substantially corresponds to the distance (36) of the first scanning element (20) relative to the second scanning element (24), so that the two removal elements (8, 12) of a removal gripper (14) are simultaneously moved or pivoted towards one another in order to close the removal gripper (14) .

12. The removal device (1) according to one of Claims 2 to 11, **characterised in that** for dispensing the baked products (2) onto the dispensing surface (5) a transition portion (28, 29) of the first control cam (19) and a transition portion (33, 34) of the second control cam (23) are arranged relative to one another in the circumferential direction of the rotary unit (7) such that the front removal element in the rotational direction of the rotary unit (7) is to be moved or is moved upstream of the rear removal element in the rotational direction of the rotary unit (7) from the outwardly extended position (11) into the retracted position (10).

13. The removal device according to one of Claims 1 to 12, **characterised in that** a plurality of first removal elements (8) are connected together via a first removal bar (37) and **in that** a plurality of second removal elements (12) are connected together via a second removal bar (38).

14. The removal device (1) according to one of Claims 2 to 13, **characterised in that** a plurality of first removal elements (8) are connected together via a first removal bar (37), **in that** a plurality of second removal elements (12) are connected together via a second removal bar (38),
**in that** the first removal bar (37) is pivotably connected to the rotary unit (7) about the first pivot axis (9) and is pivotable relative to the rotary unit (7) via the first scanning element (20) of the control device (17), and **in that** the second removal bar (38) is pivotably connected to the rotary unit (7) about the second pivot axis (13) and is pivotable relative to the rotary unit (7) via the second scanning element (24) of the control device (17).

15. The removal device (1) according to Claim 14, **characterised in that** the first removal elements (8) which are connected and controlled by the first removal bar (37) and the second removal elements which are connected and controlled by the second removal bar (38) together form a bar gripper (39) for removing a plurality of baked products (2),
and **in that** a plurality of bar grippers (39) are provided in the circumferential direction of the rotary unit (7).

16. The removal device (1) according to one of Claims 1 to 15, **characterised in that** at least one plate body (40) which is rigidly connected to the rotary unit (7) is provided in the external region of the rotary unit (7), wherein the plate body (40) comprises openings (41) for passing through the removal elements (8, 12) and **in that** a plurality of plate bodies (40) are provided which together form a housing (42) or **in that** a single curved plate body (40) forms a housing (42).

17. A baking device for producing baked products (2), in particular for producing cream-filled baked products (2), wherein the baking device comprises baking moulds (4) comprising baking presses (44) which are able to be opened and closed, said baking moulds being movable on a continuously moved endless conveyor circulating in the longitudinal direction of a machine frame (43) of the baking oven, along a conveying surface (3) from a loading device (45) through a baking chamber (46) and to a removal device (1), wherein a dispensing surface (5) is provided for transporting the baked products (2) from the baking device, **characterised**
- **in that** a removal device (1) is provided for the continuous removal of cream-filled baked products (2) from the baking moulds (4) and for the continuous transport of the baked products (2) to the dispensing surface (5),
- and **in that** the removal device (1) is configured according to one of Claims 1 to 16.

18. The baking device according to Claim 17, **characterised in that** the rotation of the rotary unit (7) is synchronised with the movement of the baking moulds (4), so that the speed of the removal elements (8, 12) in the region of the baking moulds (4) is substantially the same as the speed of the baking moulds (4).

19. The baking device according to Claim 17 or 18, **characterised in that** the rotary link or the rotary links (18, 22) of the removal device (1) is or are rigidly connected to the machine frame (43) .

20. The baking device according to one of Claims 17 to 19, **characterised in that** the removal grippers (14) are closed in the region immediately upstream of the dispensing surface (5), and **in that** the removal grippers (14) are open in the region immediately downstream of the dispensing surface (5) so that one or more baked products (2) are dispensed by the removal grippers (14) onto the dispensing surface (5).

21. The baking device according to one of Claims 17 to 20, **characterised in that** the removal grippers (14) are open in the region immediately upstream of the baking mould (4) and **in that** the removal grippers (14) are closed in the region immediately downstream of the baking mould (4), so that one or more baked products (2) are removed by one or more removal grippers (14) from the baking mould (4).

22. A method for producing and/or for continuously removing filled baked products from baking moulds moved along a conveying surface and for continuously transporting the baked products to a dispensing surface, comprising the following steps:
- rotating the rotary unit about its rotational axis;
- retracting two removal elements into a retracted position;
- rotating the removal elements in the direction of the baking mould from which the baked product is intended to be removed;
- actuating the control device when the removal elements have arrived in the region of this baking mould, whereby the removal elements are moved from the retracted position into an outwardly extended position;
- pricking the tip of at least one removal element into the baked product by moving the removal element, wherein preferably two removal elements on both sides of the baked product are pricked into said baked product;
- stopping the pricking movement of the removal elements before the removal elements penetrate the filling space so that the filling space is not perforated,
- rotating the rotary unit further so that the baked product is lifted on the circular path of the removal elements and, in particular, removed from the baking mould,
- conveying the removed baked product further along this circular path until it is located in the region of the dispensing surface;
- retracting the removal elements into a retracted position, whereby the tip of the removal element or the tips of the removal elements are pulled out of the baked product, so that the baked product is released from the rotary unit and it may be removed via the dispensing surface.

23. The method according to Claim 22, **characterised in that**
- in a first step a dough or a baking mass is applied to both baking plates of an open baking press,
- in a subsequent step a filling, such as for example a cream, a fat cream or a jam, is centrally applied to at least one baking plate of the baking press and, in particular, onto a dough applied to the baking plate or onto a baking mass applied to the baking plate,
- in a subsequent step the baking press is closed, whereby the filling is enclosed between the two dough moulds or baking mass moulds,
- in a subsequent step the two dough moulds or baking mass moulds are joined by baking in a baking chamber,
- and the filled baked products thus formed are removed with a filling space arranged therein.

## Revendications

1. Dispositif d'enlèvement (1) pour l'enlèvement continu de produits pâtissiers fourrés (2) de moules de cuisson (4) déplacés le long d'une surface de transport (3) et pour le transport continu des produits pâtissiers (2) vers une surface de distribution (5), le dispositif d'enlèvement (1) comprenant un châssis rotatif (7) pouvant être entraîné et le cas échéant entraîné, logé pouvant tourner autour d'un axe de rotation (6),
- un premier élément d'enlèvement (8) étant prévu sur le châssis rotatif (7) et pouvant être entraîné en rotation avec le châssis rotatif (7),
- le premier élément d'enlèvement (8) étant logé mobile, notamment pouvant pivoter autour d'un axe de pivotement (9) par rapport au châssis rotatif (7), de sorte que le premier élément d'enlèvement (8) peut être placé d'une position retirée (10) dans une position sortie vers l'extérieur (11),
- un deuxième élément d'enlèvement (12) étant prévu sur le châssis rotatif (7) et pouvant être entraîné en rotation avec le châssis rotatif (7),
- le deuxième élément d'enlèvement (12) étant logé mobile, notamment pouvant pivoter autour d'un axe de pivotement (13) par rapport au châssis rotatif (7), de sorte que le deuxième élément d'enlèvement (12) peut être placé d'une position retirée (10) dans une position sortie vers l'extérieur (11),
- le premier élément d'enlèvement (8) et le deuxième élément d'enlèvement (12) formant par paire un préhenseur d'enlèvement (14),
- un dispositif de commande (17) étant prévu pour déplacer les éléments d'enlèvement (8, 12) de la position retirée (10) à la position sortie vers l'extérieur (11) et de la position sortie vers l'extérieur (11) dans la position retirée (10) et pour l'ouverture et la fermeture du préhenseur d'enlèvement (14),
**caractérisé en ce que**
le dispositif de commande (17) comprend une première coulisse rotative (18) avec une première came de commande (19) et un premier élément de détection (20) guidé le long de la première came de commande (19) et **en ce que** le premier élément de détection (20) comporte un écart normal (21) et notamment un décalage par rapport au premier axe de pivotement (9) et est relié au premier élément d'enlèvement (8) de telle manière que le premier élément d'enlèvement (8) peut être déplacé par mouvement du premier élément d'enlèvement (20) de la position retirée (10) à la position sortie vers l'extérieur (11) et de la position sortie vers l'extérieur (11) à la position retirée (10).

2. Dispositif d'enlèvement (1) selon la revendication 1, **caractérisé en ce que** le dispositif de commande (17) comprend une deuxième coulisse rotative (22) avec une deuxième came de commande (23) et un deuxième élément de détection (24) guidé le long de la deuxième came de commande (23) et **en ce que** le deuxième élément de détection (24) comporte un écart normal (47) et notamment un décalage par rapport au deuxième axe de pivotement (13) et est relié au deuxième élément d'enlèvement (12) de telle manière que le deuxième élément d'enlèvement (12) peut être déplacé par mouvement du deuxième élément d'enlèvement (24) de la position retirée (10) à la position sortie vers l'extérieur (11) et de la position sortie vers l'extérieur (11) à la position retirée (10).

3. Dispositif d'enlèvement (1) selon la revendication 1 ou 2, **caractérisé en ce qu'**un des deux éléments d'enlèvement (8, 12) est doté à son extrémité libre d'une pointe (15) ou **en ce que** les deux éléments d'enlèvement (8, 12) sont respectivement dotés à leurs extrémités libres d'une pointe (15), la pointe (15) étant agencée pour plonger dans le produit pâtissier (2) à enlever.

4. Dispositif d'enlèvement (1) selon la revendication 3, **caractérisé en ce que** la distance entre la pointe (15) du premier élément d'enlèvement (8) et la pointe (15) du deuxième élément d'enlèvement (12) est dans la position sortie (11) supérieure à zéro de telle manière que les pointes (15) ne se croisent pas ni ne se touchent lors de la sortie et sont notamment plongées dans le produit pâtissier (2) éloignées du fourrage à la crème du produit pâtissier (2).

5. Dispositif d'enlèvement (1) selon l'une quelconque des revendications 1 à 4, **caractérisé en ce que** le préhenseur d'enlèvement (14) comprend un premier élément d'enlèvement (8) et un deuxième élément d'enlèvement (12) et **en ce qu'**un des deux éléments d'enlèvement (8, 12) et notamment la pointe (15) de celui-ci, est tourné dans sa position sortie (11) dans la direction de rotation du châssis rotatif (7) et **en ce que** l'autre élément d'enlèvement (8, 12) et notamment la pointe (15) de celui-ci, est tourné dans sa position sortie (11) contre la direction de rotation du châssis rotatif de telle manière que les deux éléments d'enlèvement (8, 12) et notamment les pointes (15) de ceux-ci sont tournés l'une vers l'autre dans la position sortie (11).

6. Dispositif d'enlèvement (1) selon l'une quelconque des revendications 1 à 5, **caractérisé en ce que** la pointe de l'élément d'enlèvement (8, 12) dans la position sortie (11) est tournée pour l'essentiel en direction tangentielle du châssis rotatif (7) ou **en ce que** les pointes des éléments d'enlèvement (8, 12) dans leur position sortie (11) sont tournées pour l'essentiel dans la direction tangentielle du châssis rotatif (7).

7. Dispositif d'enlèvement (1) selon l'une quelconque des revendications 1 à 6, **caractérisé en ce que** le premier élément d'enlèvement (8) est disposé pouvant pivoter autour d'un premier axe de pivotement (9) par rapport au châssis rotatif (7), le premier axe de pivotement (9) étant disposé sur le châssis rotatif (7) à distance de l'axe de rotation (6) du châssis rotatif (7) et/ou **en ce que** le deuxième élément d'enlèvement (12) est disposé pouvant pivoter par rapport au châssis rotatif (7) autour d'un deuxième axe de pivotement (13), le deuxième axe de pivotement (13) étant disposé sur le châssis rotatif (7) à distance de l'axe de rotation (6) du châssis rotatif (7) et **en ce que** le premier axe de pivotement (9) et le deuxième axe de pivotement (13) sont disposés notamment parallèles éloignés l'un de l'autre sur le châssis rotatif (7).

8. Dispositif d'enlèvement (1) selon l'une quelconque des revendications 1 à 7, **caractérisé en ce que** le premier axe de pivotement (9) et/ou le deuxième axe de pivotement (13) est ou sont disposé(s) parallèlement à distance de l'axe de rotation (6) du châssis rotatif (7) de telle sorte que les éléments d'enlèvement (8, 12) du préhenseur d'enlèvement (14) sont disposés mobiles l'un par rapport à l'autre de façon préhenseur, le long d'un plan normal de l'axe de rotation (6) du châssis rotatif (7) dans des directions opposées et **en ce que** les éléments d'enlèvement (8, 12) du préhenseur d'enlèvement (14) passent le cas échéant le long d'un plan normal de l'axe de rotation (6) du châssis rotatif (7).

9. Dispositif d'enlèvement (1) selon l'une quelconque des revendications 1 à 8, **caractérisé en ce que** la première came de commande (19) comporte une première section de came de commande (25) et une deuxième section de came de commande (26), le rayon moyen (27) de la première section de came de commande (25) étant plus petit que le rayon moyen (48) de la deuxième section de came de commande (26), **en ce qu'**au passage de la première section de came de commande (25) à la deuxième section de came de commande (26) une première section de passage (28) reliant les deux sections de came de commande (25, 26) est prévue et **en ce qu'**au passage de la deuxième section de came de commande (26) à la première section de came de commande (25), une deuxième section de passage (29) reliant les deux sections de came de commande (25, 26) est prévue.

10. Dispositif d'enlèvement selon l'une quelconque des revendications 2 à 9, **caractérisé en ce que** la deuxième came de commande (23) comporte une première section de came de commande (30) et une deuxième section de came de commande (31), le rayon moyen (32) de la première section de came de commande (30) étant plus petit que le rayon moyen (49) de la deuxième section de came de commande (31), **en ce qu'**au passage de la première section de came de commande (30) à la deuxième section de came de commande (31) une première section de passage (33) reliant les deux sections de came de commande (30, 31) est prévue et **en ce qu'**au passage de la deuxième section de came de commande (31) à la première section de came de commande (30) une section de passage (34) reliant les deux sections de came de commande (30, 31) est prévue.

11. Dispositif d'enlèvement (1) selon l'une quelconque des revendications 2 à 10, **caractérisé en ce que** pour enlèvement des produits pâtissiers (2) une section de passage (28, 29) de la première came de commande (19) et une section de passage (33, 34) de la deuxième came de commande (23) sont disposées décalées l'une par rapport à l'autre dans le sens périphérique du châssis rotatif (7), la distance (35) du déport correspondant pour l'essentiel à la distance (36) du premier élément de détection (20) par rapport au deuxième élément de détection (24) de telle manière que les deux éléments d'enlèvement (8, 12) d'un préhenseur d'enlèvement (14) sont simultanément déplacés ou pivotés l'un par rapport à l'autre pour fermer le préhenseur d'enlèvement (14).

12. Dispositif d'enlèvement (1) selon l'une quelconque des revendications 2 à 11, **caractérisé en ce que** pour la distribution des produits pâtissiers (2) sur la surface de distribution (5), une section de passage (28, 29) de la première came de commande (19) et une section de passage (33, 34) de la deuxième came de commande (23) sont disposées en direction périphérique du châssis rotatif (7) de telle manière que dans la direction de rotation du châssis rotatif (7) l'élément d'enlèvement avant sera ou est déplacé avant l'élément d'enlèvement arrière en direction de rotation du châssis rotatif (7) de la position sortie vers l'extérieur (11) à la position retirée (10).

13. Dispositif d'enlèvement selon l'une quelconque des revendications 1 à 12, **caractérisé en ce que** plusieurs premiers éléments d'enlèvement (8) sont reliés entre eux par le biais d'une première traverse d'enlèvement (37) et **en ce que** plusieurs deuxièmes éléments d'enlèvement (12) sont reliés entre eux par le biais d'une deuxième traverse d'enlèvement (38).

14. Dispositif d'enlèvement (1) selon l'une quelconque des revendications 2 à 13, **caractérisé en ce que** plusieurs premiers éléments d'enlèvement (8) sont reliés entre eux par le biais d'une première traverse d'enlèvement (37), **en ce que** plusieurs deuxièmes éléments d'enlèvement (12) sont reliés entre eux par le biais d'une deuxième traverse d'enlèvement (38),
**en ce que** la première traverse d'enlèvement (37) est reliée au châssis rotatif (7) pouvant pivoter autour de l'axe de pivotement (9) et peut pivoter sur le premier élément de détection (20) du dispositif de commande (17) par rapport au châssis rotatif (7) et **en ce que** la deuxième traverse d'enlèvement (38) est reliée au châssis rotatif (7) pouvant pivoter autour de l'axe de pivotement (13) et peut pivoter sur le deuxième élément de détection (24) du dispositif de commande (17) par rapport au châssis rotatif (7).

15. Dispositif d'enlèvement (1) selon la revendication 14, **caractérisé en ce que** les premiers éléments d'enlèvement (8) reliés et pilotés par la première traverse d'enlèvement (37) et les deuxièmes éléments d'enlèvement reliés et pilotés par le biais de la deuxième traverse d'enlèvement (38) forment ensemble un préhenseur de traverse (39) pour enlèvement de plusieurs produits pâtissiers (2),
et **en ce que** plusieurs préhenseurs de traverse (39) sont prévus le long de la direction périphérique du châssis rotatif (7).

16. Dispositif d'enlèvement (1) selon l'une quelconque des revendications 1 à 15, **caractérisé en ce que** dans la zone extérieure du châssis rotatif (7) au moins un corps à plaques (40) est prévu, qui est relié de manière rigide au châssis rotatif (7), le corps à plaques (40) comportant des ouvertures (41) pour faire passer les éléments d'enlèvement (8, 12) et **en ce que** plusieurs corps à plaques (40) sont prévus qui forment ensemble un boîtier (42) ou **en ce qu'**un corps à plaques courbé unique (40) forme un boîtier (42).

17. Dispositif de cuisson pour la fabrication de produits pâtissiers (2), notamment pour la fabrication de produits pâtissiers fourrés à la crème (2), le dispositif de cuisson comportant des moules de cuisson (4) comprenant des pinces de cuisson (44) pouvant être ouvertes et fermées, qui peuvent être déplacés sur un convoyeur sans fin circulant et déplacés en continu dans le sens longitudinal d'un châssis de machine (43) du four de cuisson le long d'une surface de transport (3) par un dispositif d'alimentation (45) à travers un espace de cuisson (46) et vers un dispositif d'enlèvement (1), une surface de distribution (5) étant prévue pour l'évacuation des produits pâtissiers (2) du dispositif de cuisson, **caractérisé en ce que**
- un dispositif d'enlèvement (1) est prévu pour l'enlèvement continu des produits pâtissiers fourrés à la crème (2) des moules de cuisson (4) et pour le transport continu des produits pâtissiers (2) vers la surface de distribution (5),
- et **en ce que** le dispositif d'enlèvement (1) est constitué selon l'une quelconque des revendications 1 à 16.

18. Dispositif de cuisson selon la revendication 17, **caractérisé en ce que** la rotation du châssis rotatif (7) est synchronisée avec le mouvement des moules de cuisson (4) de telle manière que la vitesse des éléments d'enlèvement (8, 12) dans la zone des moules de cuisson (4) est pour l'essentiel identique à la vitesse des moules de cuisson (4).

19. Dispositif de cuisson selon la revendication 17 ou 18, **caractérisé en ce que** la coulisse rotative ou les coulisses rotatives (18, 22) du dispositif d'enlèvement (1) est ou sont reliée (s) de façon rigide au châssis de machine (43).

20. Dispositif de cuisson selon l'une quelconque des revendications 17 à 19, **caractérisé en ce que** les préhenseurs d'enlèvement (14) sont fermés dans la zone directement avant la surface de distribution (5) et **en ce que** les préhenseurs d'enlèvement (14) sont ouverts dans la zone directement après la surface de distribution (5) de telle manière qu'un ou plusieurs produits pâtissiers (2) sont distribués par les préhenseurs d'enlèvement (14) sur la surface de distribution (5).

21. Dispositif de cuisson selon l'une quelconque des revendications 17 à 20, **caractérisé en ce que** les préhenseurs d'enlèvement (14) sont ouverts dans la zone directement avant le moule de cuisson (4) et **en ce que** les préhenseurs d'enlèvement (14) sont fermés dans la zone directement après le moule de cuisson (4) de telle manière qu'un ou plusieurs produits pâtissiers (2) sont prélevés du moule de cuisson (4) par un ou plusieurs préhenseurs d'enlèvement (14).

22. Procédé pour la fabrication et/ou l'enlèvement continu de produits pâtissiers fourrés de moules de cuisson déplacés le long d'une surface de transport et pour le transport continu des produits pâtissiers vers une surface de distribution comprenant les étapes suivantes :
- rotation du châssis rotatif autour de son axe de rotation ;
- retrait de deux éléments d'enlèvement dans une position retirée ;
- rotation des éléments d'enlèvement en direction du moule de cuisson duquel le produit pâtissier doit être enlevé ;
- actionnement du dispositif de commande, si les éléments d'enlèvement sont arrivés dans la zone de ce moule de cuisson, les éléments d'enlèvement étant déplacés ainsi de la position retirée à une position sortie vers l'extérieur ;
- plongée de la pointe au moins d'un élément d'enlèvement dans le produit pâtissier par mouvement de l'élément d'enlèvement, deux éléments d'enlèvement étant de préférence plongés dans celui-ci des deux côtés du produit pâtissier ;
- arrêt du mouvement de plongée des éléments d'enlèvement avant que ceux-ci ne pénètrent dans l'espace de fourrage de telle manière que l'espace de fourrage ne soit pas perforé,
- continuation de la rotation du châssis rotatif de telle manière que le produit pâtissier est soulevé sur la piste circulaire des éléments d'enlèvement et notamment éloigné du moule de cuisson,
- poursuite du transport du produit pâtissier enlevé le long de cette piste circulaire jusqu'à ce qu'il se trouve dans la zone de la surface de distribution ;
- retrait des éléments d'enlèvement dans une position retirée, la pointe de l'élément d'enlèvement ou les pointes des éléments d'enlèvement étant de ce fait retirées du produit pâtissier de telle manière que le produit pâtissier est libéré du châssis rotatif et peut être emmené sur la surface de distribution.

23. Procédé selon la revendication 22, **caractérisé en ce que**
- dans une première étape, une pâte ou une masse de cuisson est appliquée à deux plaques de cuisson d'une pince de cuisson ouverte,
- dans une étape suivante, un fourrage, comme par exemple une crème, une crème grasse ou une confiture, est appliqué de façon centrale à au moins une plaque de cuisson de la pince de cuisson et notamment à une pâte appliquée à la plaque de cuisson ou à la masse de cuisson appliquée à la plaque de cuisson,
- dans une étape suivante, la pince de cuisson est fermée, le fourrage étant de ce fait enfermé entre les deux moules de pâte ou moules de masse de cuisson,
- dans une étape suivante, les deux moules de pâte ou moules de masse de cuisson sont reliés par cuisson dans un espace de cuisson,
- et les produits pâtissiers fourrés ainsi formés sont enlevés avec un espace de fourrage disposé dedans.
